# EUROPEAN PATENT APPLICATION

(11) **EP 4 564 953 A1**
(43) Date of publication of application: **04.06.2025**
(21) Application number: 22952351.9
(22) Date of filing: 27.07.2022
(51) Int. Cl.: H04W 72/04, H04W 48/08

(54) **COMMUNICATION METHOD, APPARATUS, AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2022/108370
(87) International publication number: WO 2024/020889

(57) **Abstract**

The present disclosure relates to a communication method, an apparatus, and a storage medium. The communication method is used to a terminal, and includes: receiving configuration information for selective activation of cell groups; and on the basis of the configuration information for the selective activation of cell groups, performing cell group activation processing, the cell group activation processing comprising cell group activation and/or cell group deactivation. The present disclosure provides a terminal communication behavior suitable for selective activation of cell groups, thereby supporting the selective activation of cell groups.

## Description

### TECHNICAL FIELD

The present disclosure relates to the field of communication technology, and in particular to a communication method, apparatus and storage medium.

### BACKGROUND

In the related art, the communication technology supports selective activation of cell groups (CG) in Multi-Radio Dual Connectivity (MR-DC) technology.

Selective activation of cell groups allows subsequent configurations to be performed after the cell groups are changed, without the need for the network to reconfigure or reinitialize the corresponding configurations of selective activation of cell groups. Therefore, in the selective activation of cell groups, the network device can provide the terminal with a "cell group to be activated". The "cell group to be activated" can be activated or deactivated later without re-providing the configuration of the cell group.

In the relevant protocols, multiple cell groups to be activated are introduced, and a cell group in the multiple cell groups to be activated can be selectively activated. However, the communication behavior of the terminal for the selectively activated cell group is not clear.

### SUMMARY

In order to overcome the problems existing in the related art, the present disclosure provides a communication method, apparatus and storage medium.

According to a first aspect of an embodiment of the present disclosure, there is provided a communication method, applied to a terminal, and including:
receiving configuration information for selective activation of cell group; and performing cell group activation process based on the configuration information for selective activation of cell group, wherein the cell group activation process includes cell group activation and/or cell group deactivation.

In an implementation, the configuration information for selective activation of cell group includes a selected cell group from cell groups to be activated; and
the performing cell group activation process based on the configuration information for selective activation of cell group, includes: performing activation of the selected cell group, and/or performing deactivation of a serving cell group.

In an implementation, performing activation of the selected cell group, and/or performing deactivation of the serving cell group, includes:
in response to existence of the serving cell group, deactivating the serving cell group and activating the selected cell group.

In an implementation, performing activation of the selected cell group, and/or performing deactivation of the serving cell group, includes:
in response to existence of the serving cell group, changing a current serving cell group to the selected cell group.

In an implementation, performing activation of the selected cell group, and/or performing deactivation of the serving cell group, includes:
in response to absence of the serving cell group, activating the selected cell group.

In an implementation, the method further includes: in response to a serving cell group being deactivated, suspending configuration information of the serving cell group that is deactivated, wherein the configuration information of the serving cell group is included in the configuration information for selective activation of cell group.

In an implementation, the method further includes one or more of:
for a serving cell group being deactivated, performing radio link management RLM or stopping performing RLM;
for a serving cell group being deactivated, performing beam failure detection BFD or stopping performing BFD;
for a serving cell group being deactivated, stopping a timing advance TA timer;
resetting a media access control MAC entity.

In an implementation, the method further includes: in response to a selected cell group being activated, applying or restoring configuration information of the selected cell group, wherein the configuration information of the selected cell group is included in the configuration information for selective activation of cell group.

In an implementation, the method further includes one or more of:
for the selected cell group, starting random access RACH; and for the selected cell group, performing downlink synchronization.

In an implementation, the method further includes: in response to the configuration information of the selected cell group including synchronous reconfiguration, performing synchronous reconfiguration process.

In an implementation, the method further includes:
in response to receiving configuration information of a cell group, acquiring and/or storing the configuration information of the cell group, wherein the configuration information of the cell group is included in the configuration information for selective activation of cell group;
wherein configuration information of the cell group is configuration information of a serving cell group and/or configuration information of a cell to be activated and/or configuration information of a selected cell group.

In an implementation, the configuration information for selective activation of cell group includes a cell group to be activated, and the performing cell group activation process based on the configuration information for selective activation of cell group includes: deactivating the cell group to be activated.

In an implementation, the mode for performing activation includes one or more of:
deactivating a serving cell group and activating the selected cell group;
changing a current serving cell group to the selected cell group; and
activating the selected cell group.

In an implementation, the indication information is further used to indicate one or more activation operations performed on the selected cell group:
the activation operation includes:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer;
for the selected cell group, starting random access RACH; and
for the selected cell group, performing downlink synchronization.
resetting a media access control MAC entity.

In an implementation, the activation process performed on the cell group is determined based on a protocol rule or a terminal implementation.

In an implementation, the activation process performed on the cell group includes one or more of:
in response to key updating, performing a PDCP re-establishment;
in response to key updating, changing current activated cell by changing the cell group;
in response to triggering the terminal to activate a designated cell group and synchronization configuration including configuration information of the designated cell group, starting RACH on the designated cell group; and
in response to triggering the terminal to activate a designated cell group and BFD or RLM of the designated cell group being stopped, starting RACH for the designated cell group.

According to a second aspect of an embodiment of the present disclosure, there is provided a communication method, applied to a network device, and including:
sending configuration information for selective activation of cell group, to instruct a terminal to perform cell group activation process based on the configuration information for selective activation of cell group, wherein the cell group activation process includes cell group activation and/or cell group deactivation.

In an implementation, the configuration information for selective activation of cell group includes a selected cell group from cell groups to be activated; and
the performing cell group activation process based on the configuration information for selective activation of cell group, includes:
performing activation of the selected cell group, and/or performing deactivation of a serving cell group.

In an implementation, the method further includes:
sending configuration information of a serving cell group, wherein the configuration information of the serving cell is included in the configuration information for selective activation of cell group.

In an implementation, the method further includes:
sending configuration information of the selected cell group, wherein the configuration information of the selected cell group is included in the configuration information for selective activation of cell group.

In an implementation, the configuration information of the selected cell group includes synchronous reconfiguration.

In an implementation, the method further includes:
sending configuration information of a cell group, wherein the configuration information of the cell group is included in the configuration information for selective activation of cell group;
wherein configuration information of the cell group is configuration information of a serving cell group and/or configuration information of a cell to be activated and/or configuration information of a selected cell group.

In an implementation, the configuration information for selective activation of cell group includes a cell group to be activated; and
in an implementation, the method further includes:
sending instruction information, wherein the instruction information is configured to instruct the terminal for a mode for performing activation of a selected cell group.

In an implementation, the mode for performing activation includes one or more of:
deactivating a serving cell group and activating the selected cell group;
changing a current serving cell group to the selected cell group; and
activating the selected cell group.

In an implementation, the indication information is further used to indicate one or more activation operations performed on the selected cell group:
the activation operation includes:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer;
for the selected cell group, starting random access RACH; and
for the selected cell group, performing downlink synchronization.

According to a third aspect of an embodiment of the present disclosure, there is provided a communication apparatus, including:
a receiving unit, configured to receive configuration information for selective activation of cell group; and a processing unit, configured to perform cell group activation process based on the configuration information for selective activation of cell group, wherein the cell group activation process comprises cell group activation and/or cell group deactivation.

In an implementation, the configuration information for selective activation of cell group includes a selected cell group from cell groups to be activated; and
the performing cell group activation process based on the configuration information for selective activation of cell group, includes: performing activation of the selected cell group, and/or performing deactivation of a serving cell group.

In an implementation, performing activation of the selected cell group, and/or performing deactivation of the serving cell group, includes:
in response to existence of the serving cell group, deactivating the serving cell group and activating the selected cell group.

In an implementation, performing activation of the selected cell group, and/or performing deactivation of the serving cell group, includes:
in response to existence of the serving cell group, changing a current serving cell group to the selected cell group.

In an implementation, performing activation of the selected cell group, and/or performing deactivation of the serving cell group, includes:
in response to absence of the serving cell group, activating the selected cell group.

In an implementation, the processing unit is further configured to: in response to a serving cell group being deactivated, suspend configuration information of the serving cell group that is deactivated, wherein the configuration information of the serving cell group is included in the configuration information for selective activation of cell group.

In an implementation, the processing unit is further configured to perform one or more of:
for a serving cell group being deactivated, performing radio link management RLM or stopping performing RLM;
for a serving cell group being deactivated, performing beam failure detection BFD or stopping performing BFD;
for a serving cell group being deactivated, stopping a timing advance TA timer;
resetting a media access control MAC entity.

In an implementation, the receiving unit is further configured to: in response to a selected cell group being activated, apply or restore configuration information of the selected cell group, wherein the configuration information of the selected cell group is included in the configuration information for selective activation of cell group.

In an implementation, the processing unit is further configured to perform one or more of:
for the selected cell group, starting random access RACH; and for the selected cell group, performing downlink synchronization.

In an implementation, the processing unit is further configured to: in response to the configuration information of the selected cell group including synchronous reconfiguration, perform synchronous reconfiguration process.

In an implementation, the receiving unit is further configured to:
in response to receiving configuration information of a cell group, acquire and/or store the configuration information of the cell group, wherein the configuration information of the cell group is included in the configuration information for selective activation of cell group;
wherein configuration information of the cell group is configuration information of a serving cell group and/or configuration information of a cell to be activated and/or configuration information of a selected cell group.

In an implementation, the configuration information for selective activation of cell group includes a cell group to be activated, and the performing cell group activation process based on the configuration information for selective activation of cell group includes: deactivating the cell group to be activated.

In an implementation, the processing unit is further configured to: reset a media access control MAC entity.

In an implementation, the receiving unit is further configured to: receive indication information sent by the network device, and the processing unit is further configured to determine a mode for performing activation of the selected cell group.

In an implementation, the mode for performing activation includes one or more of:
deactivating a serving cell group and activating the selected cell group;
changing a current serving cell group to the selected cell group; and
activating the selected cell group.

In an implementation, the indication information is further used to indicate one or more activation operations performed on the selected cell group:
the activation operation includes:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer;
for the selected cell group, starting random access RACH; and
for the selected cell group, performing downlink synchronization.
resetting a media access control MAC entity.

In one implementation, the activation process performed on the cell group is determined based on a protocol rule or a terminal implementation.

In one implementation, the activation process performed on the cell group includes one or more of:
in response to key updating, performing a PDCP re-establishment;
in response to key updating, changing current activated cell by changing the cell group;
in response to triggering the terminal to activate a designated cell group and synchronization configuration including configuration information of the designated cell group, starting RACH on the designated cell group; and
in response to triggering the terminal to activate a designated cell group and BFD or RLM of the designated cell group being stopped, starting RACH for the designated cell group.

According to a fourth aspect of an embodiment of the present disclosure, there is provided a communication apparatus, including:
a sending unit, configured to send configuration information for selective activation of cell group, to instruct a terminal to perform cell group activation process based on the configuration information for selective activation of cell group, wherein the cell group activation process comprises cell group activation and/or cell group deactivation.

In an implementation, the configuration information for selective activation of cell group includes a selected cell group from cell groups to be activated; and
the performing cell group activation process based on the configuration information for selective activation of cell group, includes:
performing activation of the selected cell group, and/or performing deactivation of a serving cell group.

In an implementation, the sending unit is further configured to:
send configuration information of a serving cell group, wherein the configuration information of the serving cell is included in the configuration information for selective activation of cell group.

In an implementation, the sending unit is further configured to:
send configuration information of the selected cell group, wherein the configuration information of the selected cell group is included in the configuration information for selective activation of cell group.

In an implementation, the configuration information of the selected cell group includes synchronous reconfiguration.

In an implementation, the sending unit is further configured to:
send configuration information of a cell group, wherein the configuration information of the cell group is included in the configuration information for selective activation of cell group;
wherein configuration information of the cell group is configuration information of a serving cell group and/or configuration information of a cell to be activated and/or configuration information of a selected cell group.

In an implementation, the sending unit is further configured to:
send instruction information, wherein the instruction information is configured to instruct the terminal for a mode for performing activation of a selected cell group.

In an implementation, the mode for performing activation includes one or more of:
deactivating a serving cell group and activating the selected cell group;
changing a current serving cell group to the selected cell group; and
activating the selected cell group.

In an implementation, the indication information is further used to indicate one or more activation operations performed on the selected cell group:
the activation operation includes:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer;
for the selected cell group, starting random access RACH; and
for the selected cell group, performing downlink synchronization.

According to a fifth aspect of an embodiment of the present disclosure, there is provided a communication apparatus, including:
a processor; and
a memory for storing processor-executable instructions;
wherein the processor is configured to: execute the method according to the first aspect or any implementation of the first aspect.

According to a sixth aspect of an embodiment of the present disclosure, there is provided a communication apparatus, including:
a processor; and
a memory for storing processor-executable instructions;
wherein the processor is configured to: execute the method according to the second aspect or any implementation of the second aspect.

According to a seventh aspect of an embodiment of the present disclosure, there is provided a storage medium, wherein instructions are included in the storage medium, and when the instructions in the storage medium are executed by a processor of a terminal, the terminal is enabled to execute the method according to the first aspect or any implementation of the first aspect.

According to an eighth aspect of an embodiment of the present disclosure, there is provided a storage medium, wherein instructions are included in the storage medium, and when the instructions in the storage medium are executed by a processor of a network device, the network device is enabled to execute the method according to the second aspect or any implementation of the second aspect.

The technical solution provided by the embodiments of the present disclosure may include the following beneficial effects: based on the configuration information for selective activation of cell group, cell group activation and/or cell group deactivation is performed to provide a terminal communication behavior suitable for selective activation of cell group, thereby supporting selective activation of cell group.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram showing an EN-DC architecture according to an exemplary embodiment.
FIG. 2 is a schematic diagram showing a network architecture of NR-DC according to an exemplary embodiment.
FIG. 3 is a schematic structural diagram of an MCG and an SCG in dual connectivity according to an exemplary embodiment.
FIG. 4 is a flowchart showing a communication method according to an exemplary embodiment.
FIG. 5 is a flowchart showing a communication method according to an exemplary embodiment.
FIG. 6 is a flowchart showing a communication method according to an exemplary embodiment.
FIG. 7 is a flowchart showing a communication method according to an exemplary embodiment.
FIG. 8 is a flowchart showing a communication method according to an exemplary embodiment.
FIG. 9 is a flowchart showing a communication method according to an exemplary embodiment.
FIG. 10 is a flowchart showing a communication method according to an exemplary embodiment.
FIG. 11 is a flowchart showing a communication method according to an exemplary embodiment.
FIG. 12 is a flowchart showing a communication method according to an exemplary embodiment.
FIG. 13 is a flowchart showing a communication method according to an exemplary embodiment.
FIG. 14 is a flowchart showing a communication method according to an exemplary embodiment.
FIG. 15 is a flowchart showing a communication method according to an exemplary embodiment.
FIG. 16 is a flowchart showing a communication method according to an exemplary embodiment.
FIG. 17 is a flowchart showing a communication method according to an exemplary embodiment.
FIG. 18 is a flowchart showing a communication method according to an exemplary embodiment.
FIG. 19 is a flowchart showing a communication method according to an exemplary embodiment.
FIG. 20 is a flowchart showing a communication method according to an exemplary embodiment.
FIG. 21 is a block diagram of a communication apparatus according to an exemplary embodiment.
FIG. 22 is a block diagram of a communication apparatus according to an exemplary embodiment.
FIG. 23 is a block diagram showing an apparatus for communication according to an exemplary embodiment.
FIG. 24 is a block diagram showing an apparatus for communication according to an exemplary embodiment.

### DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the present disclosure.

It should be noted that in the present disclosure, the method provided by any embodiment can be executed alone, and any implementation method in the embodiment can also be executed alone, or combined with other embodiments, or possible implementation methods in other embodiments, and can also be executed together with any technical solution in the related technology.

The communication method provided by the embodiment of the present disclosure can be applied to a wireless communication system. In the wireless communication system, a mobile station accesses a wireless access network through a wireless access network device such as a base station, and the wireless access network device and the core network device complete the backhaul and forward transmission of data to perform various communication services.

It can be understood that a wireless communication system is a network that provides wireless communication functions. The wireless communication system can use different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), carrier sense multiple access/collision avoidance (Carrier Sense Multiple Access with Collision Avoidance). According to the capacity, rate, delay and other factors of different networks, the network can be classified into 2G (generation) network, 3G network, 4G network or future evolution network, such as 5G network, 5G network can also be called new radio network (New Radio, NR). For the convenience of description, the present disclosure sometimes refers to the wireless communication network as a network or system. In the present disclosure, the network may include a radio access network (RAN) and a core network (CN). The network includes network devices, which may be a radio access network node, a core network function, etc. In the disclosure, the radio access network node may also be referred to as a base station. The network may provide network services to the terminal through the network device, and different operators may provide different network services to the terminal, which may also be understood as different operators corresponding to different operator networks.

In the disclosure, the current wireless communication system supports the selective activation of cell groups (Cell group, CG) in Multi-Radio Dual Connectivity (MR-DC) technology.

The MR-DC is a generalized dual connection of intra evolved universal terrestrial radio access (Intra-E-UTRA) of universal mobile telecommunications system (UMTS). In it, the terminal can use the radio resources provided by two different schedulers, which are located on two different 5G radio access network (NG-RAN) nodes, connected through non-ideal backhaul, one providing NR access and the other providing E-UTRA or NR access. One acts as a master node (Master Node, MN) and the other as a secondary node (Secondary Node, SN). MN and SN are connected through a network interface, where at least MN is connected to the core network.

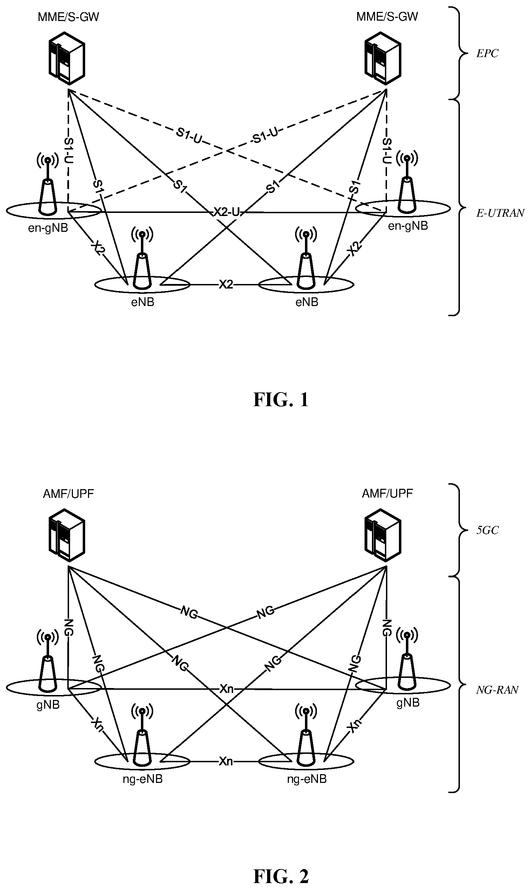

In the disclosure, the 4G evolved packet core (EPC) supports MR-DC. In the disclosure, E-UTRAN supports MR-DC through (E-UTRA-NR DC, EN-DC), and the EN-DC architecture is shown in FIG. 1. Referring to FIG. 1, the terminal is connected to an eNB acting as an MN and an en-gNB acting as an SN. The eNB is connected to the EPC through the S1 interface and to the en-gNB through the X2 interface. The en-gNB can also be connected to the EPC through the S1-U interface and to other en-gNBs through the X2-U interface.

In the disclosure, the 5G core network (5GC) supports MR-DC. In the disclosure, in one mode, the NG-RAN supports (NG-RAN E-UTRA-NR Dual Connectivity (NGEN-DC) dual connectivity, in which the terminal is connected to an ng-eNB as an MN and a gNB as an SN. The ng-eNB is connected to the 5GC, and the gNB is connected to the ng-eNB through the Xn interface. In another mode, the NG-RAN supports NR-E-UTRA DC (NR-E-UTRA Dual Connectivity, NE-DC). In which, the terminal is connected to a gNB acting as an MN and an ng-eNB acting as an SN. The gNB is connected to the 5GC, and the ng-eNB is connected to the gNB through the Xn interface. In another mode, the NG-RAN supports (NR-NR DC, NR-DC). FIG. 2 shows a network architecture diagram of NR-DC. In which, the terminal is connected to a gNB acting as an MN and another gNB acting as an SN. The primary gNB is connected to the 5GC through the NG interface, and the two gNBs are connected through the Xn interface. The secondary gNB can also be connected to the 5GC through the NG-U interface. In addition, the NR-DC can also be used for UE to access a single gNB, acting as both an MN and an SN, and configuring MCG and SCG at the same time.

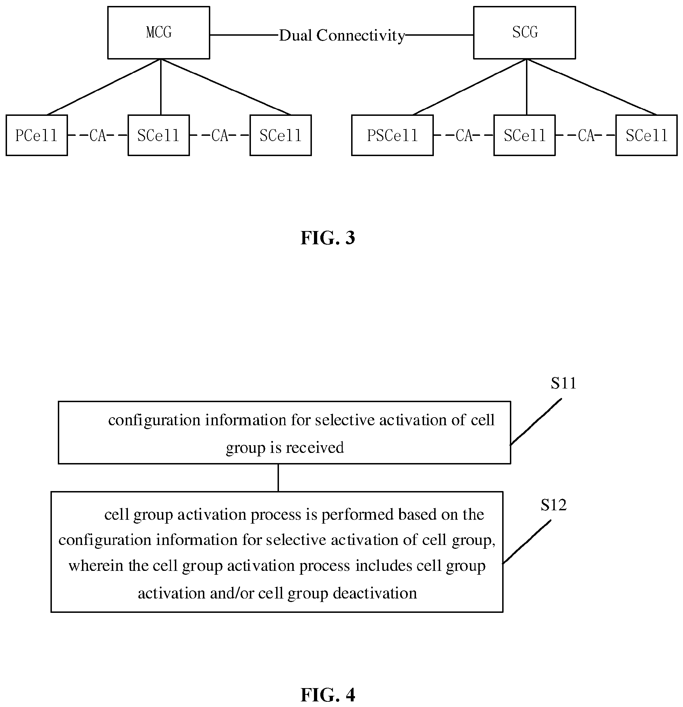

Under dual connectivity, the terminal can access two cell groups, namely the Master Cell group (MCG) and the Secondary Cell group (SCG). Under MCG, there may be many cells. Among the multiple cells, there is a cell used to initiate initial access, and this cell is referred to as PCell. In the disclosure, the PCell is the most "major" cell in MCG. FIG. 3 shows a structural diagram of MCG and SCG under dual connectivity. In the disclosure, the PCell under MCG and the SCell under MCG are combined through carrier aggregation (CA). The main cell in MCG is: PCell, and the secondary cell is: SCell. The main secondary cell in SCG is: PSCell, and the secondary cell is: SCell. Because a lot of signaling is sent on PCell and PSCell, for the convenience of description, PCell and PSCell are collectively referred to in the protocol as sPCell. The full name of sPCell in English is special Cell.

In the related art, conditional handover (CHO), conditional PSCell change (CPC) and conditional PSCell addition (CPA) are proposed. In the disclosure, for CHO/CPC/CPA, the terminal must release the CHO/CPC/CPA configuration when completing random access to the target PCell/PSCell. Therefore, if the network does not reconfigure and reinitialize CHO/CPC/CPA, the terminal will not have the opportunity to continue to execute CHO/CPC/CPA later. Therefore, the delay of handover or SCG change will be increased and the signal overhead will be increased.

Therefore, the selective activation of cell groups in MR-DC is proposed, which enables the subsequent configuration to be executed after the cell group (Cell group, CG) is changed, without the need for network reconfiguration or reinitialization of the corresponding cell group selective activation configuration information, thereby reducing the signaling overhead and the interruption duration of the cell group change.

In the disclosure, the cell group selective activation configuration information may include at least one of the following: configuration ID, activation condition (possible), configuration of the cell group/cell to be activated.

In the disclosure, the selective activation of cell group can make the subsequent configuration still executable after the cell group is changed, without the need for the network to reconfigure or reinitialize the corresponding configuration of the selective activation of cell group. Therefore, in the selective activation of cell group, the network device can provide the terminal with a "cell group to be activated". The "cell group to be activated" can be activated or deactivated later without re-providing the configuration of the cell group.

In the selective activation of cell group, the network device can provide the terminal device with a pre-configured candidate target cell group or target cell. The terminal device can subsequently activate or deactivate the pre-configured candidate cell group or cell according to the configuration (e.g., activation message) sent by the network device or the corresponding activation event, without the need to re-provide the configuration of the cell group. Alternatively, it can also be understood that in the selective activation of cell group, after activating a new cell or cell group, or applying a new cell configuration or cell group configuration, or accessing a new cell or cell group, the terminal device will not delete the corresponding configuration information for the selective activation of cell group.

Selective activation of cell groups can also be referred to as cell group activation. Cell group activation allows the corresponding configuration information to be executed after the cell group or cell is changed, without the need for the network to reconfigure or reinitialize the corresponding cell group activation configuration information. Therefore, cell group activation can reduce signaling overhead and the interruption duration for changing the cell group. The configuration information of cell group activation may include: configuration ID and the configuration of the target cell or the configuration of the target cell group. Optionally, the configuration information of cell group activation may also include trigger conditions (also referred to as execution conditions, activation conditions).

In one embodiment, cell group activation is a mobility management process, including any mobility management process in which a terminal device activates or deactivates a corresponding cell or cell group according to signaling sent by the network, criteria specified in the protocol, or autonomously by configuring a cell group activation configuration, or applies a corresponding cell configuration or cell group configuration or accesses a cell or cell group.

In one embodiment, cell group activation is a mobility management process, including any mobility management process that does not delete or release corresponding part or all of the configuration information after executing the mobility process. Not deleting or releasing the corresponding part or all of the configuration information can also be referred to as retaining the corresponding part or all of the configuration information.

In the present disclosure, the cell group is one or more of a primary cell group (MCG) and a secondary cell group (SCG). The MCG includes one or more of a primary cell (PCell) and a secondary cell (SCell). The SCG includes one or more of a primary secondary cell (PSCell) and a secondary cell (SCell).

In the present disclosure, cell group selective activation may include cell selective activation or cell activation, for example, one or more of PCell activation, PSCell activation, and SCell activation.

In the relevant protocols, SCG activation and deactivation are introduced, but this method is applicable to the change of the state of a single SCG and does not involve the change of the state of multiple SCGs. However, it is currently supported to introduce multiple cell groups to be activated, and cell groups can be selectively activated from the multiple cell groups to be activated. However, this may involve changes in cell groups, and the current protocol does not specify the specific action of the terminal on how to selectively activate a cell group from multiple cell groups to be activated. In other words, the communication behavior of the terminal for selectively activating a cell is not clear.

In view of this, the present disclosure provides a communication method, in which cell group activation processing is performed based on configuration information for selective activation of cell group, so as to clarify the communication behavior of the terminal for selectively activating cells to support selective activation of cell group.

In the embodiment, the cell group involved in the following embodiments of the present disclosure may include one or more cells. The cell group activation process can be understood as the cell group/cell activation process. Therefore, the cell group involved in the following embodiments of the present disclosure can be understood as a cell, or can also be understood as a cell group.

It can be understood that the cell group involved in the following embodiments of the present disclosure can be a master cell group (MCG) or a secondary cell group (SCG), and the cell can be one of a primary cell (PCell), a primary secondary cell (PSCell) and a secondary cell (SCell).

In the present disclosure, a cell group may refer to any one or more of a primary cell, a primary secondary cell, and a secondary cell.

It can be further understood that the cell group activation processing involved in the present disclosure includes cell group activation processing, and may also include cell group deactivation processing, and may also include cell group activation processing and cell group deactivation processing.

In the present disclosure, the cell group activation process may also include the cell activation process.

The cell activation process involved in the present disclosure includes cell activation process, may also include cell deactivation process, and may also include cell activation process and cell deactivation process.

FIG. 4 is a flowchart of a communication method according to an exemplary embodiment. As shown in FIG. 4, the communication method is used in a terminal and includes the following steps.

In step S11, configuration information for selective activation of cell group is received.

In step S12, a cell group activation process is performed based on the configuration information for selective activation of cell group, wherein the cell group activation process includes cell group activation and/or cell group deactivation.

In the communication method provided by the embodiment of the present disclosure, the terminal receives configuration information for selective activation of cell group, and performs cell group activation and/or cell group deactivation based on the configuration information for selective activation of cell group, so as to provide a terminal communication behavior suitable for selective activation of cell group, thereby supporting selective activation of cell group.

In a communication method provided by an embodiment of the present disclosure, the configuration information for selective activation of cell group includes the cell group configuration information of the cell group to be activated. The configuration information for selective activation of cell group may also include the configuration information of the currently activated cell group.

In a communication method provided by an embodiment of the present disclosure, the configuration information for selective activation of cell group includes an activation command, which can also be understood as configuration information for indicating a selected cell group to be activated and/or configuration information for a cell group to be deactivated.

In one embodiment, in response to the configuration information for selective activation of cell group including an indication of a selected cell group that needs to be activated, the performing cell group activation processing based on the configuration information for selective activation of cell group, includes: executing activation of the selected cell group, and/or executing deactivation of the serving cell group.

In one embodiment, in response to configuration information for selective activation of cell group including configuration information of a selected cell group, the performing cell group activation processing based on the configuration information for selective activation of cell group, includes: executing activation of the selected cell group, and/or executing deactivation of the serving cell group.

In the embodiment, the configuration information for selective activation of cell group in the embodiment of the present disclosure may include: a configuration ID and a configuration of a target cell or a configuration of a target cell group. Optionally, the configuration information for cell group activation may also include a trigger condition (also referred to as an execution condition or an activation condition).

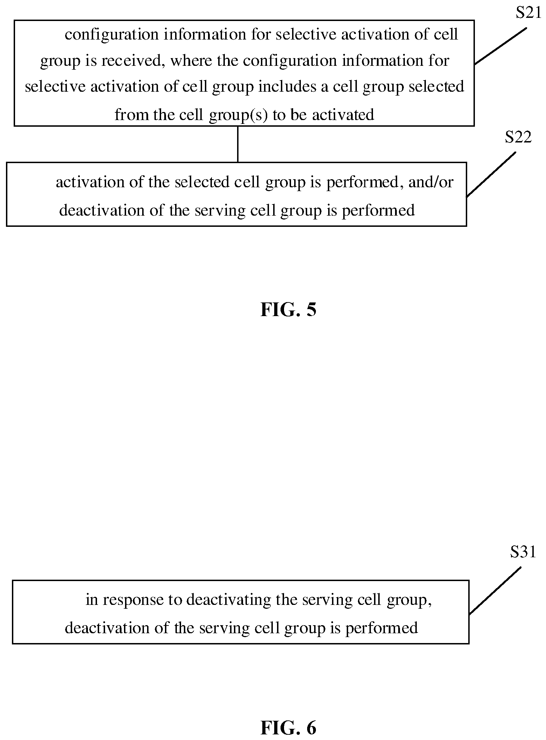

FIG. 5 is a flowchart showing a communication method according to an exemplary embodiment. As shown in FIG. 5, the communication method is used in a terminal and includes the following steps.

In step S21, configuration information for selective activation of cell group is received, where the configuration information for selective activation of cell group includes a cell group selected from the cell group(s) to be activated.

In step S22, activation of the selected cell group is performed, and/or deactivation of the serving cell group is performed.

It can be understood that the serving cell group involved in the embodiment of the present disclosure and the following embodiments can be understood as the currently activated cell group.

In the embodiment of the present disclosure, the configuration information for selective activation of cell group includes, on the one hand, the cell group configuration information of the cell group to be activated, and on the other hand, the configuration information for selective activation of cell group may also include the configuration information of the currently activated cell group.

In a communication method provided by an embodiment of the present disclosure, configuration information for selective activation of cell group includes an activation command, which can also be understood as configuration information for indicating a selected cell group to be activated and/or configuration information for a cell group to be deactivated.

In the embodiment, the configuration information for selective activation of cell group in the embodiment of the present disclosure may include: a configuration ID and a configuration of a target cell or a configuration of a target cell group. Optionally, the configuration information for cell group activation may also include a trigger condition (also referred to as an execution condition or an activation condition).

In the embodiment, the serving cell group in the embodiment of the present disclosure is the currently activated cell group. When the selected cell group is successfully activated, it becomes the serving cell group. Before being activated, the current serving cell group may be a "cell group to be activated". After being deactivated, the serving cell group may be a cell group to be activated.

In a communication method provided by an embodiment of the present disclosure, the terminal performing activation of a selected cell group and/or deactivation of a serving cell group, includes one or more of the following situations.

Case 1: Deactivate the serving cell group and activate the selected cell group.

Case 2: Change the current serving cell group to the selected cell group.

Case 3: Activate the selected cell group.

In a communication method provided by an embodiment of the present disclosure, the terminal performing activation of a selected cell group and/or deactivation of a serving cell group, further includes one or more of the following situations.

Case 1: In response to the existence of the serving cell group, the serving cell group is deactivated and the selected cell group is activated.

Case 2: In response to the existence of the serving cell group, the current serving cell group is changed to the selected cell group.

Case 3: In response to the absence of the serving cell group, the selected cell group is activated.

It should be noted that, in the embodiment of the present disclosure, the absence of the serving cell group for the terminal, on the one hand, it may be that there is no serving secondary cell group or no secondary cell group is activated. In this case, the terminal can interact with the network device based on the primary cell group and obtain corresponding information, such as receiving configuration information for selective activation of cell group through the primary cell group. On the other hand, in the embodiment of the present disclosure, the absence of the serving cell group for the terminal may also be that there is no serving primary cell group or no primary cell group is activated. In this case, the configuration information for selective activation of cell group can be obtained in advance when there is a serving cell group.

In the embodiment of the present disclosure, the activation of a certain cell group/cell by a terminal is taken as an example for explanation.

In a communication method provided in an embodiment of the present disclosure, a terminal communicates in one or more of the following ways.
A: In response to triggering the terminal to activate a certain cell group/cell (this cell group/cell that needs to be activated is referred to as the selected cell group/cell), if there is an activated cell group/cell at this time, one or more of the following A\B\C can be executed:
   a) Perform deactivation of the current serving cell group/cell, and perform activation of the selected cell group/cell. In this manner, it can be understood that the current serving cell group/cell is the cell group/cell activated by the current terminal.
   b) Execute cell group/cell change to change the cell group/cell to which the current terminal is connected. This method can be understood as changing from connecting to the current serving cell group/cell to connecting to the selected cell group/cell.
B: In response to triggering the terminal to activate the selected cell group/cell, if there is no activated cell group/cell at this time, the following steps may be performed:
   a) Perform activation of the selected cell group/cell.
C: In response to the UE deactivating the current serving cell group/cell, the following steps may be performed:
   a) Perform deactivation of the current serving cell group/cell.

In a communication method provided by an embodiment of the present disclosure, in response to triggering a terminal to activate a certain cell group, if there is an activated cell group at this time, the terminal can, on the one hand, deactivate the current serving cell group and activate the selected cell group, and on the other hand, the terminal can also change the cell group, that is, change the cell group currently connected by the terminal, from the connection with the current serving cell group to the connection with the selected cell group.

In a communication method provided by an embodiment of the present disclosure, in response to triggering a terminal to activate a selected cell group, if no activated cell group exists at this time, activation of the selected cell group is performed.

In a communication method provided by an embodiment of the present disclosure, in response to a terminal deactivating a current serving cell group, deactivation of the current serving cell group is performed.

In a communication method provided by the embodiment of the present disclosure, on the one hand, in the selective activation of cell group, all "cell groups/cells to be activated" can be in a deactivated state, that is, the terminal currently does not activate any cell group/cell, that is, there is no current serving cell group/cell.

In a communication method provided by the embodiment of the present disclosure, on the other hand, in the selective activation of cell group, there is only one "cell group/cell to be activated" in the activated state, that is, the terminal can only activate one or more cell groups/cells at the same time.

In the embodiment, in a communication method provided by an embodiment of the present disclosure, the terminal determines whether to activate a cell group/cell according to one or more of network pre-configured conditions, network instructions, protocol regulations or terminal implementation.

In a communication method provided by an embodiment of the present disclosure, the terminal may also determine the selected cell group/or cell based on one or more of network pre-configured conditions, network instructions, protocol provisions or terminal implementation, to change the current serving cell group/cell.

In one implementation, in the communication method provided by the embodiment of the present disclosure, when a cell group is selected, configuration information of the selected cell group can be applied or restored.

In a communication method provided by an embodiment of the present disclosure, the terminal determines whether to deactivate a current serving cell group/cell according to one or more of network preconfigured conditions, network instructions, protocol provisions or implementations.

In one implementation, in the communication method provided by the embodiment of the present disclosure, when a serving cell group is deactivated, configuration information of the deactivated serving cell group may be suspended.

FIG. 6 is a flowchart showing a communication method according to an exemplary embodiment. As shown in FIG. 6, the communication method is used in a terminal and includes the following steps.

In step S31, in response to deactivating the serving cell group, deactivation of the serving cell group is performed.

Exemplarily, deactivating the serving cell group is deactivating the currently activated cell group.

In a communication method provided by an embodiment of the present disclosure, executing deactivation of a serving cell group includes suspending configuration information of the deactivated serving cell group.

In the embodiment, the suspending the configuration information of the deactivated serving cell group may be, for example, suspending radio resource reconfiguration (RRCReconfiguration) information corresponding to the deactivated serving cell group.

Exemplarily, the configuration information of the serving cell group is included in the configuration information for selective activation of cell group.

The configuration information for selective activation of cell group may include the cell group configuration information of the cell group to be activated, and the configuration information for selective activation of cell group may also include the configuration information of the currently activated cell group.

In a communication method provided by an embodiment of the present disclosure, configuration information for selective activation of cell group includes an activation command. It can also be understood as being used to indicate a selected cell group that needs to be activated and/or a cell group that needs to be deactivated.

In another communication method provided by an embodiment of the present disclosure, performing deactivation of a serving cell group may include one or more of the following.
a) For the deactivated serving cell group, the radio link monitoring (RLM) is performed or RLM is stopped.
b) For the deactivated serving cell group, the beam failure detection (BFD) is performed or BFD is stopped.
c) For the deactivated serving cell group, the Timing Advance (TA) timer is stopped.
d) The media access control (MAC) entity is reset.

In the embodiment, the deactivation of the serving cell group in the embodiment of the present disclosure is not limited to the above aspects.

In the embodiments of the present disclosure, the serving cell group being a certain cell group/cell is taken as an example for description.

In the communication method provided in an embodiment of the present disclosure, executing deactivation of a serving cell group may also include other aspects, for example, may include but is not limited to one or more of the following.
a) Suspend the configuration (for example: RRCReconfiguration) corresponding to this cell group/cell;
b) Consider the cell group/cell to be in a deactivated state;
c) The Radio Resource Control (RRC) layer informs the lower layer that this cell group/cell is in a deactivated state;
d) Determine whether to continue to perform RLM on this cell group/cell or stop RLM according to the indication information;
e) Determine whether to continue BFD for the cell or the cell group or to stop BFD according to the indication information;
f) Stop the timer T310;
g) Stop the timer T312;
h) Reset the counters N310 and N312;
i) Reestablish the Radio Link Control (RLC) protocol layer;
j) Reestablish the Packet Data Convergence Protocol (PDCP) layer;
k) Trigger the PDCP entity of the Signaling Radio Bearer (SRB3) to discard the service data unit (SDU); and
l) Reset the MAC entity.

In a communication method provided by an embodiment of the present disclosure, when activating a selected cell group, activation of the selected cell group may be performed.

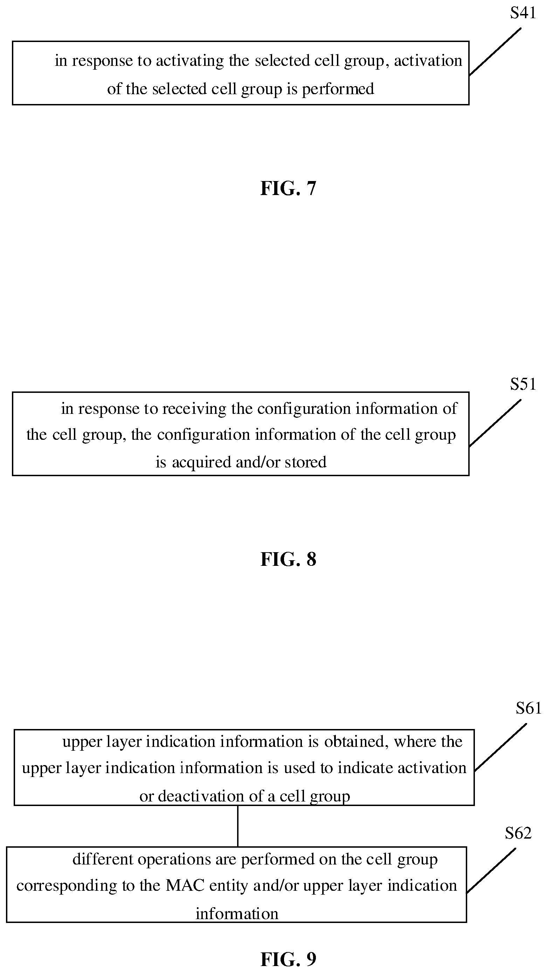

FIG. 7 is a flowchart showing a communication method according to an exemplary embodiment. As shown in FIG. 7, the communication method is used in a terminal and includes the following steps.

In step S41, in response to activating the selected cell group, activation of the selected cell group is performed.

In a communication method provided by an embodiment of the present disclosure, activation of a selected cell group is performed, including applying or restoring configuration information of the selected cell group.

In the embodiment, the configuration information of the selected cell group may be, for example, RRCReconfiguration.

Exemplarily, in an embodiment of the present disclosure, configuration information of the selected cell group is included in the configuration information for selective activation of cell group.

In a communication method provided by an embodiment of the present disclosure, the configuration information for selective activation of cell group may include the cell group configuration information of the cell group to be activated, and the configuration information for selective activation of cell group may also include the configuration information of the currently activated cell group.

In a communication method provided by an embodiment of the present disclosure, the configuration information for selective activation of cell group includes an activation acommand, which can also be understood as being used to indicate a selected cell group that needs to be activated and/or a cell group that needs to be deactivated.

In a communication method provided by an embodiment of the present disclosure, executing activation of the selected cell group may include but is not limited to one or more of the following.
a) For the selected cell group, start random access RACH.
b) For the selected cell group, perform downlink synchronization.

In the embodiment, the activation of the selected cell group executed in the embodiment of the present disclosure is not limited to the above aspects.

In a communication method provided by an embodiment of the present disclosure, executing activation of the selected cell group may include but is not limited to one or more of the following.
a) Apply/restore the configuration (for example, RRCReconfiguration) of the cell group, wherein applying/restoring the configuration of the cell group includes executing a part or all of the process of applying or restoring the configuration information;
b) Consider the cell group/cell to be in an activated state;
c) The RRC layer informs the lower layer that this cell group/cell is in an activated state;
d) Resume the RLM for this cell group/cell (wherein, in this case, it is necessary to determine that the RLM for this cell group/cell was previously stopped);
e) Restore the BFD for this cell or a cell in the cell group (wherein, in this case, it is necessary to determine that the BFD for this cell group/cell was previously stopped);
f) Start the Random Access Channel (RACH) on this cell or on a cell in this cell group; and
g) Perform the synchronous reconfiguration process, for example, a portion or all of the synchronous reconfiguration process is performed.

In an implementation of the communication method provided by the embodiment of the present disclosure, in response to configuration information of the selected cell group including synchronous reconfiguration, a synchronous reconfiguration process is performed.

Exemplarily, the synchronous reconfiguration process in the embodiments of the present disclosure includes but is not limited to one or more of the following.
a) Start T304 corresponding to the cell or the cell group;
b) Start the downlink synchronization and perform the downlink synchronization with the cell or a cell in the cell group;
c) Apply the Broadcast Control Channel (BCCH) configuration of the cell or a cell in this cell group;
d) Obtain the Master Information Block (MIB) of the cell or the cell group;
e) Reset the MAC;
f) Use the value of the newUE-Identity in the application configuration information as the cell radio network temporary identifier (Cell RNTI, C-RNTI); and
g) Configure the physical layer (PHY) according to the configuration information.

Exemplarily, in a communication method provided by the present disclosure, for the above-mentioned downlink synchronization, the process of performing downlink synchronization on a certain cell group/cell is supplemented with the following description.

The terminal starts downlink synchronization to the cell or the cell of the cell group upon cell group/cell activation according to the protocol provisions.

For example, when activating a cell group/cell, if the synchronization of the cell or the cell of the cell group is unavailable, downlink synchronization to the cell or the cell of the cell group is initiated.

In an implementation of the communication method provided by the embodiment of the present disclosure, in response to receiving the configuration information of the cell group to be activated, the configuration information of the selected cell group is received. In other words, when the terminal receives the configuration information for the selective activation of cell group, the terminal reads the configuration information of the cell group in the selective activation of cell group and/or applies the configuration information of the cell group.

FIG. 8 is a flowchart of a communication method according to an exemplary embodiment. As shown in FIG. 8, the communication method is used in a terminal and includes the following steps.

In step S51, in response to receiving the configuration information of the cell group, the configuration information of the cell group is acquired and/or stored.

Exemplarily, the configuration information of the cell group is included in the configuration information for selective activation of cell group.

The configuration information of the cell group is the configuration information of the serving cell group and/or the configuration information of the cell to be activated and/or the configuration information of the selected cell group.

The configuration information of the serving cell group may be included in the configuration information for selective activation of cell group. The configuration information of the cell to be activated may also be included in the configuration information for selective activation of cell group. The configuration information of the selected cell group may be included in the configuration information for selective activation of cell group.

Exemplarily, the configuration information of the cell group may include initial configuration information of the cell group/cell.

In the embodiment of the present disclosure, when applying the configuration information of the cell group, a specified communication behavior may be performed.

In a communication method provided by the embodiments of the present disclosure, for a certain cell group/cell, a specified communication behavior can be executed based on the initial configuration information of the cell group/cell, or the specified communication behavior is not executed.

Exemplary: If the initial configuration information of the cell group/cell indicates that the cell group/cell is activated, the specified communication behavior is performed.

Exemplary: If the initial configuration information of the cell group/cell indicates that the cell group/cell is deactivated, the specified communication behavior is not performed.

In a communication method provided by the embodiment of the present disclosure, when applying the configuration information of the cell group/cell, if the cell group/cell corresponding to the execution of this process is a cell group/cell to be activated (this cell/cell group is activated during initial configuration), the specified communication behavior is performed. If the cell group/cell corresponding to the execution of this process is a deactivated cell group/cell (this cell/cell group is not activated during initial configuration), the specified communication behavior is not performed.

When applying the configuration information of the cell group, the specified communication behavior includes one or more of the following.
a) Start the T304 corresponding to the cell or the cell group;
b) Start the downlink synchronization and perform the downlink synchronization with the cell or the cell in the cell group;
c) Apply the BCCH configuration of the cell or the cell of the cell group;
d) Acquire the MIB of the cell or the cell group;
e) Reset the MAC;
f) Use the value of the newUE-Identity in the configuration information as the C-RNTI;
g) Perform configuration of the PDCP, RLC, MAC, and PHY according to the configuration information; and
h) Start the RACH.

In a communication method provided by an embodiment of the present disclosure, in the process of applying the configuration information of a cell group/cell, the terminal starts downlink synchronization to the cell or the cell of the cell group according to the protocol when the cell group/cell is activated. For example, when the cell group/cell is activated, if synchronization of the cell or the cell of the cell group is not available, the downlink synchronization to this cell or the cell of the cell group is started.

In a communication method provided by an embodiment of the present disclosure, in response to triggering the terminal to activate a selected cell group/cell, perform activation of the selected cell group/cell, in the case of determining the existence of the configuration of the cell group/cell, and/or the cell group/cell not being the current serving cell group/cell.

Exemplarily, the process of executing the activation of the selected cell group/cell includes the process of applying/restoring the configuration of the cell group.

In a communication method provided by an embodiment of the present disclosure, the configuration information for selective activation of cell group includes the cell group configuration information of the cell group to be activated. The configuration information for selective activation of cell group may also include the configuration information of the currently activated cell group.

In a communication method provided by an embodiment of the present disclosure, the configuration information for selective activation of cell group includes an activation command, which can also be understood as configuration information for indicating a selected cell group to be activated and/or configuration information for a cell group to be deactivated.

In one embodiment, in response to the configuration information for selective activation of cell group including an indication of a selected cell group that needs to be activated, the performing cell group activation processing based on the configuration information for selective activation of cell group, includes: executing activation of the selected cell group, and/or executing deactivation of the serving cell group.

In one embodiment, in response to configuration information for selective activation of cell group including configuration information of the selected cell group, the performing cell group activation processing based on the configuration information for selective activation of cell group, includes: executing activation of the selected cell group, and/or executing deactivation of the serving cell group.

In the embodiment, the configuration information for selective activation for cell group in the embodiment of the present disclosure may include: a configuration ID and a configuration of a target cell or a configuration of a target cell group. Optionally, the configuration information of the cell group activation may also include a trigger condition (also referred to as an execution condition or an activation condition).

In the communication method provided in the embodiment of the present disclosure, the cell group can be activated or deactivated according to the upper layer indication, and different operations can be performed on the cell group corresponding to the MAC entity and/or the upper layer indication information.

FIG. 9 is a flowchart of a communication method according to an exemplary embodiment. As shown in FIG. 9, the communication method is used in a terminal and includes the following steps.

In step S61, upper layer indication information is obtained, where the upper layer indication information is used to indicate activation or deactivation of a cell group.

Exemplarily, the upper layer refers to the upper layer of the MAC layer, which may be one or more of the RRC layer, the PDCP layer, the RLC layer, and the NAS layer.

Exemplarily, the upper layer indicating the activation or deactivation of a cell group, may be that the upper layer indicates the cell group to be in an activated state or a deactivated state.

In step S62, different operations are performed on the cell group corresponding to the MAC entity and/or upper layer indication information.

In the communication method provided in the embodiment of the present disclosure, different operations are performed on the cell group corresponding to the MAC entity and/or the indication information based on the activation state or inactivation state of the cell group indicated by the upper layer.

In one example, if the upper layer indicates to activate the cell group, the operations performed may include one or more of the following.
a) Start the RACH if beam failure is detected or the TA timer is not running;
b) Instruct the physical layer to activate the cell/cell group;
c) Restart or start the uplink authorization of the suspended configuration;
d) Perform the SRS transmission on the cell or the cell in the cell group;
e) Perform the CSI reporting on the cell or the cell in the cell group;
f) Perform the PDCCH monitoring on the cell or the cell in the cell group;
g) Perform the PUCCH transmission on the cell or the cell in the cell group; and
h) Initialize the logic information Bj to 0.

In another example, if the upper layer instructs to deactivate the cell group, the operations performed may include one or more of the following.
a) Deactivate all the SCells in the cell group;
b) Instruct the physical layer to deactivate the cell/cell group;
c) Reset the MAC;
d) Not perform the SRS transmission on the cell or the cell in the cell group;
e) Not report the CSI on the cell or the cell in the cell group;
f) Not perform the transmission on the UL-SCH in the cell or the cell in the cell group;
g) Not perform the PUCCH transmission in the cell or the cell in the cell group;
h) The cell or the cell in the cell group do not perform the transmission on the RACH; and
i) The cell or the cell in the cell group do not monitor the PDCCH.

In one implementation, in the disclosed embodiment, in response to deactivating a cell group, the MAC entity is reset.

In one implementation, in the disclosed embodiment, in response to a change in the current serving cell, the MAC entity is reset.

In one implementation, in the disclosed embodiment, in response to activating a cell group, the MAC entity is reset.

In the embodiment of the present disclosure, resetting the MAC entity includes but is not limited to one or more of the following steps.
a) If the MAC reset is initiated not because of the deactivation of a cell/cell group, the Bj of each logical channel may be initialized to zero;
b) For deactivating the cell/cell group, and the corresponding indication information indicating to continue BFD/RLM for the deactivated cell/cell group, stop all running timers except the BFD timer and the TA timer.
c) For deactivating the cell / cell group, if the corresponding indication information does not indicate to continue BFD/RLM for the deactivated cell/cell group, stop all the running timers;
d) If the MAC reset is initiated not because of the deactivation of the cell/cell group, stop all the running timers;
e) Set the NDIs value of all the uplink HARQ processes to 0;
f) In response to existence of the MAC reset initiated by deactivation of a cell/cell group, stop the ongoing RACH;
g) For 4-step random access type and 2-step random access type, in response to existence of the MAC reset initiated by deactivation of a cell/cell group, discard the explicitly indicated contention-free RACH resources;
h) Clear the message 3 (Msg3) buffer;
i) Refresh the message A (MSGA) buffer;
j) In response to existence of the MAC reset initiated by deactivation of a cell/cell group, cancel the triggered scheduling request procedure;
k) In response to existence of the MAC reset initiated by deactivation of a cell/cell group, cancel the triggering buffer status reporting procedure;
l) In response to existence of the MAC reset initiated by deactivation of a cell/cell group, cancel the triggering power headroom reporting procedure;
m) In response to existence of the MAC reset initiated by deactivation of a cell/cell group, cancel the triggered listen before talk (LBT) failure;
n) In response to existence of the MAC reset initiated by deactivation of a cell/cell group, cancel the triggered Beam Failure Recovery (BFR);
o) In response to existence of the MAC reset initiated by deactivation of a cell/cell group, cancel the triggered recommended bit rate query procedure;
p) In response to existence of the MAC reset initiated by deactivation of a cell/cell group, cancel the triggered configuration uplink grant confirmation;
q) In response to existence of the MAC reset initiated by deactivation of a cell/cell group, refresh the soft buffers of all downlink hybrid automatic repeat request (DL HARQ) processes;
r) In response to existence of the MAC reset initiated by deactivation of a cell/cell group, for each DL HARQ process, consider the next receiving transmission of a Transport Block (TB) as the first transmission;
s) In response to existence of the MAC reset initiated by deactivation of a cell/cell group, release the temporary C-RNTI;
t) If the upper layer indicates that the SCG is deactivated and the corresponding indication information does not indicate to continue BFD/RLM for the deactivated cell/cell group, or the MAC reset is not initiated by the deactivation of the cell/cell group, reset the beam failure indication counter (BFI_COUNTERs); and
u) Resets all listen-before-talk counters (LBT_COUNTERs).

In a communication method provided by the embodiment of the present disclosure, the terminal receives configuration information for selective activation of cell group, and performs cell group activation and/or cell group deactivation based on the configuration information for selective activation of cell group, so as to provide a terminal communication behavior suitable for selective activation of cell group, thereby supporting selective activation of cell group.

In a communication method provided by an embodiment of the present disclosure, the configuration information for selective activation of cell group includes the cell group configuration information of the cell group to be activated. The configuration information for selective activation of cell group may also include the configuration information of the currently activated cell group.

In a communication method provided by an embodiment of the present disclosure, configuration information for selective activation of cell group includes an activation command, which can also be understood as configuration information for indicating a selected cell group to be activated and/or configuration information for a cell group to be deactivated.

In one embodiment, in response to the configuration information for selective activation of cell group including an indication of a selected cell group that needs to be activated, the performing cell group activation processing based on the configuration information for selective activation of cell group, includes: executing activation of the selected cell group, and/or executing deactivation of the serving cell group.

In one embodiment, in response to configuration information for selective activation of cell group including configuration information of a selected cell group, the performing cell group activation processing based on the configuration information for selective activation of cell group, includes: executing activation of the selected cell group, and/or executing deactivation of the serving cell group.

In the embodiment, the configuration information for selective activation of cell group in the embodiment of the present disclosure may include: a configuration ID and a configuration of a target cell or a configuration of a target cell group. Optionally, the configuration information for cell group activation may also include a trigger condition (also referred to as an execution condition or an activation condition).

In a communication method provided by an embodiment of the present disclosure, the activation of a selected cell group and/or deactivation of a serving cell group performed by the terminal includes changing a current serving cell group to the selected cell group.

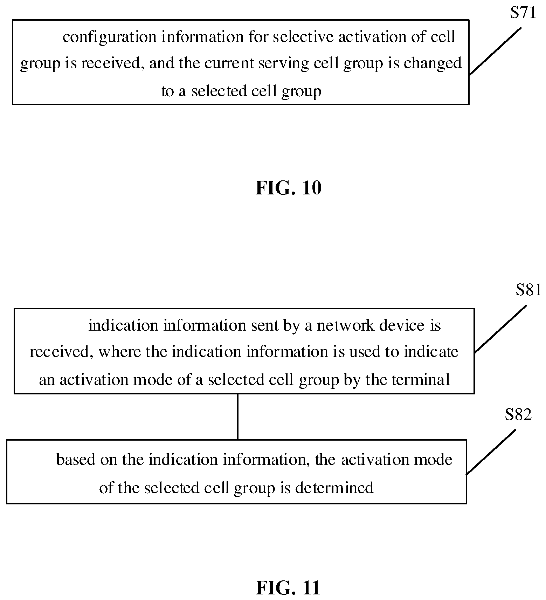

FIG. 10 is a flowchart showing a communication method according to an exemplary embodiment. As shown in FIG. 8, the communication method is used in a terminal and includes the following steps.

In step S71, configuration information for selective activation of cell group is received, and the current serving cell group is changed to a selected cell group.

In the communication method provided by the embodiments of the present disclosure, when changing the current serving cell group to the selected cell group, on the one hand, it may include part or all of the processes of deactivating the current serving cell and activating the selected cell involved in the above embodiments.

In a communication method provided by the embodiment of the present disclosure, when changing the current serving cell group to the selected cell group, on the other hand, a cell handover process may be initiated. When the cell handover process is initiated to change the serving cell group, configuration information may not be read when configuration information is received. Alternatively, when the cell group change is triggered, the application carries the configuration information of the cell group in synchronous reconfiguration.

In a communication method provided by an embodiment of the present disclosure, an activation mode of the selected cell group by a terminal may be indicated by a network device.

FIG. 11 is a flowchart of a communication method according to an exemplary embodiment. As shown in FIG. 11, the communication method is used in a terminal and includes the following steps.

In step S81, indication information sent by a network device is received, where the indication information is used to indicate an activation mode of a selected cell group by the terminal.

In step S82, based on the indication information, the activation mode of the selected cell group is determined.

Exemplarily, the indication information sent by the network device in the embodiment of the present disclosure may be used to instruct the terminal to change the activation mode of the activated cell.

In an implementation of the communication method provided in the embodiment of the present disclosure, the activation mode includes one or more of the following.
a) Deactivate the serving cell group and activate the selected cell group;
b) Change the current serving cell group to the selected cell group; and
c) Activate the selected cell group.

In a communication method provided by an embodiment of the present disclosure, the terminal determines to change the activated cell by using the way of activating and/or deactivating the cell group/cell according to the instruction information sent by the network device.

In a communication method provided by an embodiment of the present disclosure, a terminal determines to change an activated cell by the way of changing the current serving cell group according to instruction information sent by a network device.

Exemplary: By changing the current serving cell to the selected cell, the current serving cell group is changed to change the activated cell.

In a communication method provided by an embodiment of the present disclosure, the terminal determines specific action of the terminal to perform cell group activation processing according to the instruction information sent by the network device.

In a communication method provided by an embodiment of the present disclosure, the specific action of performing cell group activation processing includes one or more of the following.
a) Deactivate the serving cell group and activate the selected cell group.
b) Change the current serving cell group to the selected cell group.
c) Activate the selected cell group.

In the embodiment of the present disclosure, description is made by taking the activation process of a certain cell group/cell as an example.

In a communication method provided by an embodiment of the present disclosure, a network device sends indication information, and the indication information is also used to instruct a terminal on specific action of performing cell group activation processing, so that the terminal determines the specific action of performing cell group activation processing according to the indication information sent by the network device.

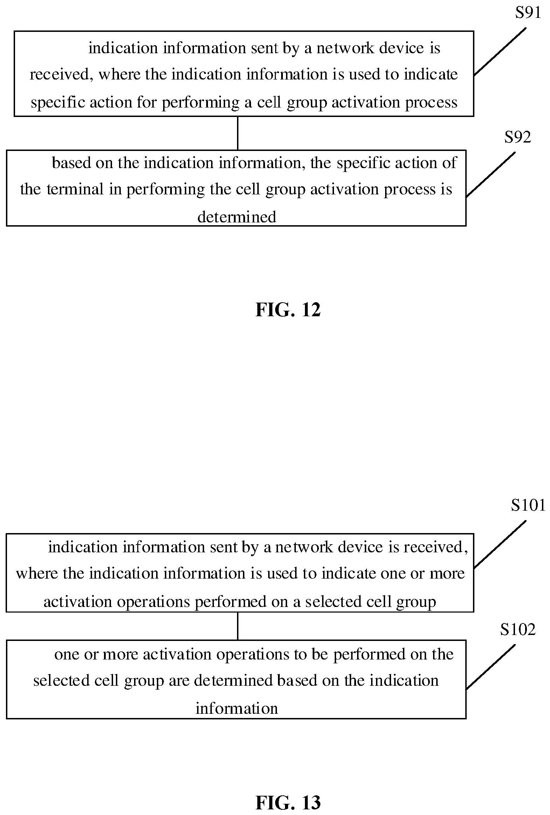

FIG. 12 is a flowchart of a communication method according to an exemplary embodiment. As shown in FIG. 12, the communication method is used in a terminal and includes the following steps.

In step S91, indication information sent by a network device is received, where the indication information is used to indicate specific action for performing a cell group activation process.

In step S92, based on the indication information, the specific action of the terminal in performing the cell group activation process is determined.

Exemplarily, for a certain cell group/cell, the indication information sent by the network device can indicate the specific action of performing cell group/cell activation processing, so that the terminal determines the specific action of the terminal performing cell group/cell activation processing according to the indication information sent by the network device.

In an example, the indication information is used to indicate the procedure that needs to be executed for the terminal to activate the cell group/cell, and the terminal determines the procedure that needs to be executed for the terminal to activate the cell group/cell according to the indication information.

In an example, the indication information is used to indicate the procedure that needs to be executed by the terminal to deactivate the cell group/cell, and the terminal determines the procedure that needs to be executed by the terminal to deactivate the cell group/cell according to the indication information.

In an example, the indication information is used to indicate the process that needs to be executed by the terminal for changing the cell group/cell, and the terminal determines the process that needs to be executed by the terminal for changing the cell group/cell according to the indication information.

It can be understood that the terminal in the embodiment of the present disclosure can determine one or more operations in the corresponding processes performed by the terminal on the cell group/cell involved in the above embodiments according to the indication information, and the embodiment of the present disclosure will not be described in detail here.

It can be understood that the indication information sent by the network device in the embodiment of the present disclosure can be used to indicate at least one of the following.
a) The activation mode of the cell group selected by the terminal.
b) The specific action of the terminal in performing cell group activation processing.

In a communication method provided by the embodiment of the present disclosure, the indication information is also used to indicate one or more activation operations performed on the selected cell group.

FIG. 13 is a flowchart of a communication method according to an exemplary embodiment. As shown in FIG. 13, the communication method is used in a terminal and includes the following steps.

In step S101, indication information sent by a network device is received, where the indication information is used to indicate one or more activation operations performed on a selected cell group.

In step S102, one or more activation operations to be performed on the selected cell group are determined based on the indication information.

Exemplarily, the activation operation includes but is not limited to one or more of the following.
a) Determine whether the terminal executes RACH according to the indication information, for example, start RACH on a cell that needs to be activated or a cell in a cell group that needs to be activated.
b) For the deactivated serving cell group, BFD is performed or BFD is stopped. For example, it is determined according to the indication information whether the UE performs BFD for the deactivated cell group/cell.
c) For the deactivated serving cell group, RLM is performed or RLM is stopped. For example, the terminal determines whether the terminal performs RLM for the deactivated cell group/cell according to the indication information.
d) For the deactivated serving cell group, the timing advance TA timer is stopped. For example, it is determined according to the indication information whether the terminal stops the TA timer for the deactivated cell group/cell.
e) Determine whether the UE performs downlink synchronization according to the indication information.
f) For the selected cell group, downlink synchronization is performed. For example, it is determined according to the indication information whether the terminal performs downlink synchronization, wherein downlink synchronization is performed on a cell that needs to be activated or a cell in a cell group that needs to be activated.

It can be understood that the activation operation involved in the embodiments of the present disclosure may be the activation operations involved in the process that needs to be executed for the terminal to activate the cell group/cell, and/or the process that needs to be executed for deactivating the cell group/cell, and/or the process that needs to be executed for the terminal to change the cell group/cell in the above-mentioned embodiments, and the embodiments of the present disclosure do not limit this. For example, the embodiments of the present disclosure can determine whether to execute any one or more activation operations involved in the process that needs to be executed for the terminal to activate the cell group/cell, and/or the process that needs to be executed for deactivating the cell group/cell, and/or the process that needs to be executed for the terminal to change the cell group/cell in the above-mentioned embodiments according to the indication information.

It can be further understood that the indication information sent by the network device in the embodiment of the present disclosure can be used to indicate at least one of the following.
a) The activation mode of the cell group selected by the terminal.
b) The specific action of the terminal in performing cell group activation processing.
c) One or more activation operations performed on the selected cell group.

In a communication method provided by the embodiment of the present disclosure, the indication information sent by the network device may be independently configured for each cell/cell group, or may be independently configured for the selective activation configuration of each cell/cell group. In the present embodiment, for the activation/deactivation of a cell group/cell, it can be determined whether to perform a specific step according to the indication information specific to the cell group/cell.

In a communication method provided by the embodiment of the present disclosure, the indication information sent by the network device may be general indication information, and whether to execute specific steps is determined according to the indication information regardless of which cell group/cell is activated/deactivated.

In a communication method provided by the embodiment of the present disclosure, the indication information sent by the network device may be a separate indication information sent independently, or may be carried in an existing signaling. For example, in the embodiment of the present disclosure, the indication information sent by the network device may be included in the cell group selective activation configuration, and when activating this cell group, the terminal determines whether to execute the above-mentioned related process of the activation processing performed on the cell group according to the corresponding configuration information. For another example, in the embodiment of the present disclosure, the indication information may also be included in the activation command, and when the terminal receives the activation command, it determines whether to execute the above-mentioned related process of the activation processing performed on the cell group according to the indication information in the activation command.

In one implementation of the communication method provided by the embodiment of the present disclosure, the activation process performed on the cell group may be determined based on a protocol rule or a terminal implementation.

In one implementation, the activation process of a cell group/cell is used as an example for explanation, and the activation process performed on the cell group based on the protocol rule or the terminal implementation includes one or more of the following.
a) In response to key updating, perform a PDCP re-establishment;
b) In response to key updating, change current activated cell group/cell by changing the cell group/cell;
c) In response to triggering the terminal to activate a designated cell group/cell and synchronization configuration including configuration information of the designated cell group/cell, start RACH on the designated cell group, or cell, or cell in the cell group; and
d) In response to triggering the terminal to activate a designated cell group/cell and BFD or RLM of the designated cell group/cell being stopped, start RACH for the designated cell group, cell, or cell in the cell group.

In a communication method provided by the embodiment of the present disclosure, a terminal behavior suitable for selective activation of cell group is provided, to support selective activation of cell group.

The terminal activating a cell group in the "cell groups to be activated" (which may be referred to as a selected cell group or a cell group been selected), including one or more of the following situations.
a) If the terminal currently has a serving cell group, deactivate the serving cell group and activate the selected cell group;
b) If the terminal currently does not have a serving cell group, activate the selected cell group; and
c) If the terminal currently has a serving cell group, perform the cell group changing, and start a handover process.

In the embodiment of the present disclosure, the serving cell group is the currently activated cell group. When the selected cell group is successfully activated, it becomes the serving cell group. Before being activated, the current serving cell group may be a "cell group to be activated". After being deactivated, the serving cell group becomes the cell group to be activated.

In the embodiment, the communication method provided by the embodiment of the present disclosure also clarifies the specific terminal behavior of the terminal activating/deactivating the cell group/cell. For example, during the initial configuration, the terminal reads the configuration information of the cell group/cell. For the cell group configuration whose initial state is activated, the terminal applies the corresponding cell group/cell configuration. For the deactivated cell group/cell, the terminal suspends the configuration corresponding to this cell group/cell. If the cell group/cell with existing configuration is activated, the terminal applies or restores the corresponding cell group/cell configuration.

In the embodiment, in the embodiment of the present disclosure, the terminal can determine whether corresponding process is needed to be performed for the activation and deactivation of the cell group/cell according to the indication information of the network device. For example, according to the indication information of the network device, determine whether to activate the corresponding cell or cell group using the activation/deactivation scheme or the handover scheme. For another example, the terminal determines whether to continue RLM/BFD when deactivating the corresponding cell group/cell according to the indication information of the network device; and determines the specific action of the terminal in the cell group/cell activation process according to the indication information sent by the network device.

Based on the same concept, an embodiment of the present disclosure also provides a communication method applied to a network device.

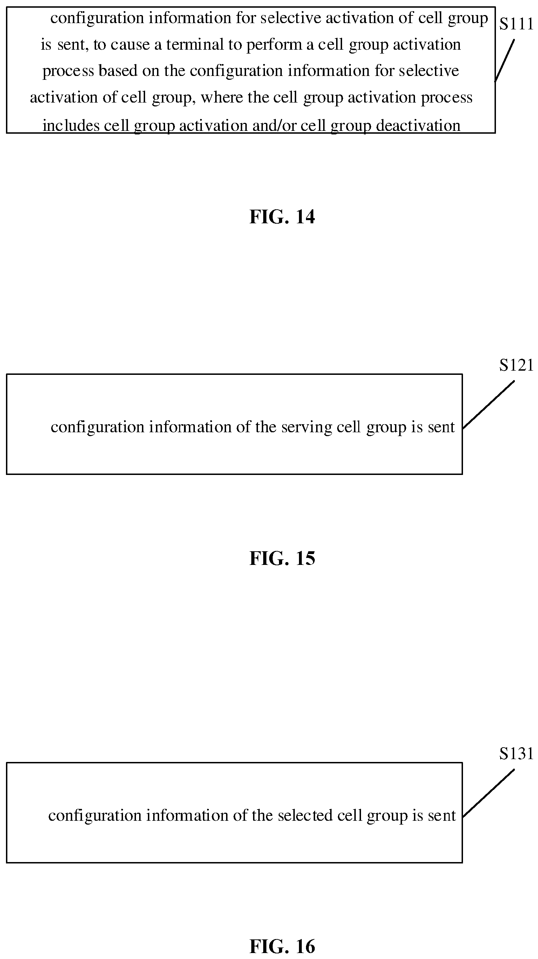

FIG. 14 is a flowchart of a communication method according to an exemplary embodiment. As shown in FIG. 14, the communication method is used in a network device and includes the following steps.

In step S111, configuration information for selective activation of cell group is sent, to cause a terminal to perform a cell group activation process based on the configuration information for selective activation of cell group, where the cell group activation process includes cell group activation and/or cell group deactivation.

In a communication method provided by an embodiment of the present disclosure, the configuration information for selective activation of cell group includes the cell group configuration information of the cell group to be activated. The configuration information for selective activation of cell group may also include the configuration information of the currently activated cell group.

In a communication method provided by an embodiment of the present disclosure, the configuration information for selective activation of cell group includes an activation command, which can also be understood as configuration information for indicating a selected cell group to be activated and/or configuration information for a cell group to be deactivated.

In one embodiment, in response to the configuration information for selective activation of cell group including an indication of a selected cell group that needs to be activated, the performing cell group activation processing based on the configuration information for selective activation of cell group, includes: executing activation of the selected cell group, and/or executing deactivation of the serving cell group.

In one embodiment, in response to configuration information for selective activation of cell group including configuration information of a selected cell group, the performing cell group activation processing based on the configuration information for selective activation of cell group, includes: executing activation of the selected cell group, and/or executing deactivation of the serving cell group.

In the embodiment, the configuration information for selective activation of cell group in the embodiment of the present disclosure may include: a configuration ID and a configuration of a target cell or a configuration of a target cell group. Optionally, the configuration information for cell group activation may also include a trigger condition (also referred to as an execution condition or an activation condition).

In a communication method provided by an embodiment of the present disclosure, the terminal performing activation of a selected cell group and/or deactivation of a serving cell group, includes one or more of the following situations.

Case 1: Deactivate the serving cell group and activate the selected cell group.

Case 2: Change the current serving cell group to the selected cell group.

Case 3: Activate the selected cell group.

In a communication method provided by an embodiment of the present disclosure, the terminal performing activation of a selected cell group and/or deactivation of a serving cell group, further includes one or more of the following situations.

Case 1: In response to the existence of the serving cell group, the serving cell group is deactivated and the selected cell group is activated.

Case 2: In response to the existence of the serving cell group, the current serving cell group is changed to the selected cell group.

Case 3: In response to the absence of the serving cell group, the selected cell group is activated.

In one implementation, performing the activation of the selected cell group and/or deactivation of the service cell group, includes: in response to the existence of a service cell group, deactivating the service cell group, and activating the selected cell group.

In one implementation, performing the activation of the selected cell group and/or performing the deactivation of the service cell group, includes: in response to the existence of the serving cell group, the current serving cell group is changed to the selected cell group.

In one implementation, performing the activation of the selected cell group and/or performing the deactivation of the service cell group, includes: in response to the absence of the serving cell group, the selected cell group is activated.

In the embodiment of the present disclosure, the activation of a certain cell group/cell by a terminal is taken as an example for explanation.

In a communication method provided in an embodiment of the present disclosure, a terminal communicates in one or more of the following ways.
A: In response to triggering the terminal to activate a certain cell group/cell (this cell group/cell that needs to be activated is referred to as the selected cell group/cell), if there is an activated cell group/cell at this time, one or more of the following A\B\C can be executed:
   a) Perform deactivation of the current serving cell group/cell, and perform activation of the selected cell group/cell. In this manner, it can be understood that the current serving cell group/cell is the cell group/cell activated by the current terminal.
   b) Execute cell group/cell change to change the cell group/cell to which the current terminal is connected. This method can be understood as changing from connecting to the current serving cell group/cell to connecting to the selected cell group/cell.
B: In response to triggering the terminal to activate the selected cell group/cell, if there is no activated cell group/cell at this time, the following steps may be performed:
   a) Perform activation of the selected cell group/cell.
C: In response to the UE deactivating the current serving cell group/cell, the following steps may be performed:
   a) Perform deactivation of the current serving cell group/cell.

In a communication method provided by an embodiment of the present disclosure, in response to triggering a terminal to activate a certain cell group, if there is an activated cell group at this time, the terminal can, on the one hand, deactivate the current serving cell group and activate the selected cell group, and on the other hand, the terminal can also change the cell group, that is, change the cell group currently connected by the terminal, from the connection with the current serving cell group to the connection with the selected cell group.

In a communication method provided by an embodiment of the present disclosure, in response to triggering a terminal to activate a selected cell group, if no activated cell group exists at this time, activation of the selected cell group is performed.

In a communication method provided by an embodiment of the present disclosure, in response to a terminal deactivating a current serving cell group, deactivation of the current serving cell group is performed.

In a communication method provided by the embodiment of the present disclosure, on the one hand, in the selective activation of cell group, all "cell groups/cells to be activated" can be in a deactivated state, that is, the terminal currently does not activate any cell group/cell, that is, there is no current serving cell group/cell.

In a communication method provided by the embodiment of the present disclosure, on the other hand, in the selective activation of cell group, there is only one "cell group/cell to be activated" in the activated state, that is, the terminal can only activate one or more cell groups/cells at the same time.

In one implementation, in the communication method provided by the embodiment of the present disclosure, the network device may send configuration information of the serving cell group.

FIG. 15 is a flowchart of a communication method according to an exemplary embodiment. As shown in FIG. 15, the communication method is used in a network device and includes the following steps.

In step S121, configuration information of the serving cell group is sent.

Exemplarily, the configuration information of the serving cell is included in the configuration information for selective activation of cell group.

In the embodiment of the present disclosure, the network device sends the configuration information of the serving cell group, so that the terminal deactivates the serving cell group based on the configuration information of the serving cell group and performs deactivation of the serving cell group.

Exemplarily, deactivating the serving cell group means deactivating the currently activated cell group.

In a communication method provided by an embodiment of the present disclosure, executing deactivation of a serving cell group includes suspending configuration information of the deactivated serving cell group.

In the embodiment, the suspending the configuration information of the deactivated serving cell group may be, for example, suspending radio resource reconfiguration (RRCReconfiguration) information corresponding to the deactivated serving cell group.

In another communication method provided by an embodiment of the present disclosure, performing deactivation of a serving cell group may include one or more of the following.
a) For the deactivated serving cell group, the radio link monitoring (RLM) is performed or RLM is stopped.
b) For the deactivated serving cell group, the beam failure detection (BFD) is performed or BFD is stopped.
c) For the deactivated serving cell group, the Timing Advance (TA) timer is stopped.
d) The media access control (MAC) entity is reset.

In the embodiment, the deactivation of the serving cell group in the embodiment of the present disclosure is not limited to the above aspects.

In the embodiments of the present disclosure, the serving cell group being a certain cell group/cell is taken as an example for description.

In the communication method provided in an embodiment of the present disclosure, executing deactivation of a serving cell group may also include one or more of the following.
a) Suspend the configuration (for example: RRCReconfiguration) corresponding to this cell group/cell;
b) Consider the cell group/cell to be in a deactivated state;
c) The Radio Resource Control (RRC) layer informs the lower layer that this cell group/cell is in a deactivated state;
d) Determine whether to continue to perform RLM on this cell group/cell or stop RLM according to the indication information;
e) Determine whether to continue BFD for the cell or the cell group or to stop BFD according to the indication information;
f) Stop the timer T310;
g) Stop the timer T312;
h) Reset the counters N310 and N312;
i) Reestablish the Radio Link Control (RLC) protocol layer;
j) Reestablish the Packet Data Convergence Protocol (PDCP) layer;
k) Trigger the PDCP entity of the Signaling Radio Bearer (SRB3) to discard the service data unit (SDU); and
l) Reset the MAC entity.

In a communication method provided by an embodiment of the present disclosure, the network device may send the configuration information of the selected cell group, to allow the terminal to perform activation of the selected cell group when activating the selected cell group.

FIG. 16 is a flowchart showing a communication method according to an exemplary embodiment. As shown in FIG. 16, the communication method is used in a network device and includes the following steps.

In step S131, configuration information of the selected cell group is sent.

In the embodiment of the present disclosure, the configuration information of the selected cell group is included in the configuration information for selective activation of cell group.

In a communication method provided by an embodiment of the present disclosure, the configuration information for selective activation of cell group includes, on the one hand, the cell group configuration information of the cell group to be activated, and on the other hand, the configuration information for selective activation of cell group may also include the configuration information of the currently activated cell group.

In a communication method provided by an embodiment of the present disclosure, configuration information for selective activation of cell group includes an activation command, which can also be understood as configuration information for indicating a selected cell group to be activated and/or configuration information for a cell group to be deactivated.

Exemplarily, executing activation of the selected cell group includes: applying or restoring configuration information of the selected cell group.

In the embodiment, the configuration information of the selected cell group may be, for example, RRCReconfiguration.

In a communication method provided by an embodiment of the present disclosure, executing activation of the selected cell group may include but is not limited to one or more of the following.
a) For the selected cell group, start random access RACH.
b) For the selected cell group, perform downlink synchronization.

In the embodiment, the activation of the selected cell group executed in the embodiment of the present disclosure is not limited to the above aspects.

In a communication method provided by an embodiment of the present disclosure, executing activation of the selected cell group may include but is not limited to one or more of the following.
a) Apply/restore the configuration (for example, RRCReconfiguration) of the cell group, wherein applying/restoring the configuration of the cell group includes executing a part or all of the process of applying or restoring the configuration information;
b) Consider the cell group/cell to be in an activated state;
c) The RRC layer informs the lower layer that this cell group/cell is in an activated state;
d) Resume the RLM for this cell group/cell (wherein, in this case, it is necessary to determine that the RLM for this cell group/cell was previously stopped);
e) Restore the BFD for this cell or a cell in the cell group (wherein, in this case, it is necessary to determine that the BFD for this cell group/cell was previously stopped);
f) Start the Random Access Channel (RACH) on this cell or on a cell in this cell group; and
g) Perform the synchronous reconfiguration process, for example, a portion or all of the synchronous reconfiguration process is performed.

In an implementation, the configuration information of the selected cell group includes synchronous reconfiguration, so that the terminal executes a synchronous reconfiguration process.

Exemplarily, the synchronous reconfiguration process in the embodiments of the present disclosure includes but is not limited to one or more of the following.
a) Start T304 corresponding to the cell or the cell group;
b) Start the downlink synchronization and perform the downlink synchronization with the cell or a cell in the cell group;
c) Apply the Broadcast Control Channel (BCCH) configuration of the cell or a cell in this cell group;
d) Obtain the Master Information Block (MIB) of the cell or the cell group;
e) Reset the media access control (MAC);
f) Use the value of the newUE-Identity in the application configuration information as the cell radio network temporary identifier (Cell RNTI, C-RNTI); and
g) Configure the physical layer (PHY) according to the configuration information.
h) Exemplarily, in a communication method provided by the present disclosure, for the above-mentioned downlink synchronization, the process of performing downlink synchronization on a certain cell group/cell is supplemented with the following description.
i) The terminal starts downlink synchronization to the cell or the cell of the cell group upon cell group/cell activation according to the protocol provisions.
j) For example, when activating a cell group/cell, if the synchronization of the cell or the cell of the cell group is unavailable, downlink synchronization to the cell or the cell of the cell group is initiated.

In an implementation of the communication method provided by the embodiment of the present disclosure, in response to sending the configuration information of the cell group to be activated, the configuration information of the selected cell group is sent.

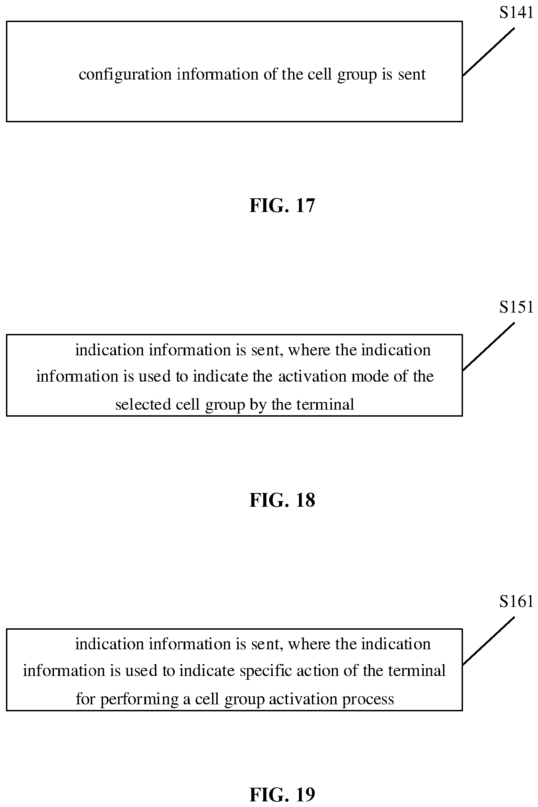

FIG. 17 is a flowchart of a communication method according to an exemplary embodiment. As shown in FIG. 17, the communication method is used in a network device and includes the following steps.

In step S141, configuration information of the cell group is sent.

The configuration information of the cell group is included in the configuration information for selective activation of cell group.

The configuration information of the cell group is the configuration information of the serving cell group and/or the configuration information of the cell to be activated and/or the configuration information of the selected cell group.

The configuration information of the serving cell group is included in the configuration information for selective activation of cell group. The configuration information of the cell to be activated may also be included in the configuration information for selective activation of cell group. The configuration information of the selected cell group may also be included in the configuration information for selective activation of cell group.

Exemplarily, the configuration information of the cell group may include initial configuration information of the cell group/cell.

In the embodiment of the present disclosure, when applying the configuration information of the cell group, a specified communication behavior may be performed.

In a communication method provided by the embodiments of the present disclosure, for a certain cell group/cell, a specified communication behavior can be executed based on the initial configuration information of the cell group/cell, or the specified communication behavior is not executed.

In a communication method provided by the embodiment of the present disclosure, when applying the configuration information of the cell group/cell, if the cell group/cell corresponding to the execution of this process is a cell group/cell to be activated (this cell/cell group is activated during initial configuration), the specified communication behavior is performed. If the cell group/cell corresponding to the execution of this process is a deactivated cell group/cell (this cell/cell group is not activated during initial configuration), the specified communication behavior is not performed.

When applying the configuration information of the cell group, the specified communication behavior includes one or more of the following.
i) Start the T304 corresponding to the cell or the cell group;
j) Start the downlink synchronization and perform the downlink synchronization with the cell or the cell in the cell group;
k) Apply the BCCH configuration of the cell or the cell of the cell group;
l) Acquire the MIB of the cell or the cell group;
m) Reset the MAC;
n) Use the value of the newUE-Identity in the configuration information as the C-RNTI;
o) Perform configuration of the PDCP, RLC, MAC, and PHY according to the configuration information; and
p) Start the RACH.

In a communication method provided by an embodiment of the present disclosure, in the process of applying the configuration information of a cell group/cell, the terminal starts downlink synchronization to the cell or the cell of the cell group according to the protocol when the cell group/cell is activated. For example, when the cell group/cell is activated, if synchronization of the cell or the cell of the cell group is not available, the downlink synchronization to this cell or the cell of the cell group is started.

In a communication method provided by an embodiment of the present disclosure, in response to triggering the terminal to activate a selected cell group/cell, perform activation of the selected cell group/cell, in the case of determining the existence of the configuration of the cell group/cell, and/or the cell group/cell not being the current serving cell group/cell.

Exemplarily, the process of executing the activation of the selected cell group/cell includes the process of applying/restoring the configuration of the cell group.

In a communication method provided by an embodiment of the present disclosure, the configuration information for selective activation of cell group includes the cell group configuration information of the cell group to be activated. The configuration information for selective activation of cell group may also include the configuration information of the currently activated cell group.

In a communication method provided by an embodiment of the present disclosure, the configuration information for selective activation of cell group includes an activation command, which can also be understood as configuration information for indicating a selected cell group to be activated and/or configuration information for a cell group to be deactivated.

In one embodiment, in response to the configuration information for selective activation of cell group including an indication of a selected cell group that needs to be activated, the performing cell group activation processing based on the configuration information for selective activation of cell group, includes: executing activation of the selected cell group, and/or executing deactivation of the serving cell group.

In one embodiment, in response to configuration information for selective activation of cell group including configuration information of the selected cell group, the performing cell group activation processing based on the configuration information for selective activation of cell group, includes: executing activation of the selected cell group, and/or executing deactivation of the serving cell group.

In the embodiment, the configuration information for selective activation for cell group in the embodiment of the present disclosure may include: a configuration ID and a configuration of a target cell or a configuration of a target cell group. Optionally, the configuration information of the cell group activation may also include a trigger condition (also referred to as an execution condition or an activation condition).

In a communication method provided by the embodiment of the present disclosure, the terminal receives configuration information for selective activation of cell group, and performs cell group activation and/or cell group deactivation based on the configuration information for selective activation of cell group, so as to provide a terminal communication behavior suitable for selective activation of cell group, thereby supporting selective activation of cell group.

In a communication method provided by an embodiment of the present disclosure, the configuration information for selective activation of cell group includes the cell group configuration information of the cell group to be activated. The configuration information for selective activation of cell group may also include the configuration information of the currently activated cell group.

In a communication method provided by an embodiment of the present disclosure, configuration information for selective activation of cell group includes an activation command, which can also be understood as configuration information for indicating a selected cell group to be activated and/or configuration information for a cell group to be deactivated.

**In** one embodiment, in response to the configuration information for selective activation of cell group including an indication of a selected cell group that needs to be activated, the performing cell group activation processing based on the configuration information for selective activation of cell group, includes: executing activation of the selected cell group, and/or executing deactivation of the serving cell group.

**In** one embodiment, in response to configuration information for selective activation of cell group including configuration information of a selected cell group, the performing cell group activation processing based on the configuration information for selective activation of cell group, includes: executing activation of the selected cell group, and/or executing deactivation of the serving cell group.

**In** the embodiment, the configuration information for selective activation of cell group in the embodiment of the present disclosure may include: a configuration ID and a configuration of a target cell or a configuration of a target cell group. Optionally, the configuration information for cell group activation may also include a trigger condition (also referred to as an execution condition or an activation condition).

**In** a communication method provided by an embodiment of the present disclosure, the activation of a selected cell group and/or deactivation of a serving cell group performed by the terminal includes changing a current serving cell group to the selected cell group.

**In** the communication method provided by the embodiments of the present disclosure, when changing the current serving cell group to the selected cell group, on the one hand, it may include part or all of the processes of deactivating the current serving cell and activating the selected cell involved in the above embodiments.

**In** a communication method provided by the embodiment of the present disclosure, when changing the current serving cell group to the selected cell group, on the other hand, a cell handover process may be initiated. When the cell handover process is initiated to change the serving cell group, configuration information may not be read when configuration information is received. Alternatively, when the cell group change is triggered, the application carries the configuration information of the cell group in synchronous reconfiguration.

**In** a communication method provided by an embodiment of the present disclosure, a network device may send indication information to indicate an activation mode of a cell group selected by a terminal.

FIG. 18 is a flowchart of a communication method according to an exemplary embodiment. As shown in FIG. 18, the communication method is used in a network device and includes the following steps.

In step S151, indication information is sent, where the indication information is used to indicate the activation mode of the selected cell group by the terminal.

Exemplarily, the indication information sent by the network device in the embodiment of the present disclosure may be used to instruct the terminal to change the activation mode of the activated cell.

In an implementation of the communication method provided in the embodiment of the present disclosure, the activation mode includes one or more of the following.
a) Deactivate the serving cell group and activate the selected cell group;
b) Change the current serving cell group to the selected cell group; and
c) Activate the selected cell group.

In a communication method provided by an embodiment of the present disclosure, the terminal determines to change the activated cell by using the way of activating and/or deactivating the cell group/cell according to the instruction information sent by the network device.

In a communication method provided by an embodiment of the present disclosure, a terminal determines to change an activated cell by the way of changing the current serving cell group according to instruction information sent by a network device.

Exemplary: By changing the current serving cell to the selected cell, the current serving cell group is changed to change the activated cell.

In a communication method provided by an embodiment of the present disclosure, the terminal determines specific action of the terminal to perform cell group activation processing according to the instruction information sent by the network device.

In a communication method provided by an embodiment of the present disclosure, the specific action of performing cell group activation processing includes one or more of the following.
a) Deactivate the serving cell group and activate the selected cell group.
b) Change the current serving cell group to the selected cell group.
c) Activate the selected cell group.

In the embodiment of the present disclosure, description is made by taking the activation process of a certain cell group/cell as an example.

In a communication method provided by an embodiment of the present disclosure, a network device sends indication information, and the indication information is also used to instruct a terminal on specific action of performing cell group activation processing, so that the terminal determines the specific action of performing cell group activation processing according to the indication information sent by the network device.

FIG. 19 is a flowchart of a communication method according to an exemplary embodiment. As shown in FIG. 19, the communication method is used in a network device and includes the following steps.

In step S161, indication information is sent, where the indication information is used to indicate specific action of the terminal for performing a cell group activation process.

Exemplarily, the indication information is used to indicate the specific action of performing cell group/cell activation processing, so that the terminal determines the specific action of the terminal performing cell group/cell activation processing according to the indication information sent by the network device.

In an example, the indication information is used to indicate the procedure that needs to be executed for the terminal to activate the cell group/cell, and the terminal determines the procedure that needs to be executed for the terminal to activate the cell group/cell according to the indication information.

In an example, the indication information is used to indicate the procedure that needs to be executed by the terminal to deactivate the cell group/cell, and the terminal determines the procedure that needs to be executed by the terminal to deactivate the cell group/cell according to the indication information.

In an example, the indication information is used to indicate the process that needs to be executed by the terminal for changing the cell group/cell, and the terminal determines the process that needs to be executed by the terminal for changing the cell group/cell according to the indication information.

It can be understood that the terminal in the embodiment of the present disclosure can determine one or more operations in the corresponding processes performed by the terminal on the cell group/cell involved in the above embodiments according to the indication information, and the embodiment of the present disclosure will not be described in detail here.

It can be understood that the indication information sent by the network device in the embodiment of the present disclosure can be used to indicate at least one of the following.
a) The activation mode of the cell group selected by the terminal.
b) The specific action of the terminal in performing cell group activation processing.

In a communication method provided by the embodiment of the present disclosure, the indication information is also used to indicate one or more activation operations performed on the selected cell group.

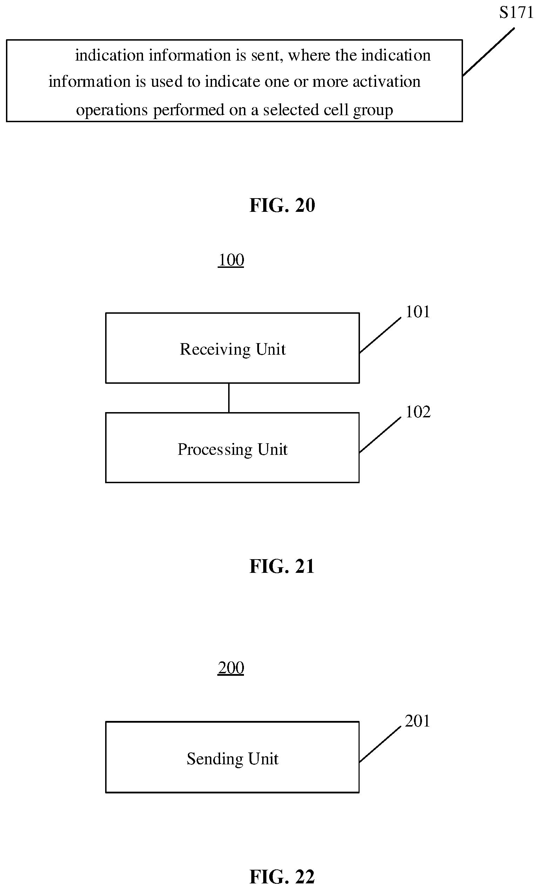

FIG. 20 is a flowchart of a communication method according to an exemplary embodiment. As shown in FIG. 20, the communication method is used in a network device and includes the following steps.

In step S171, indication information is sent, where the indication information is used to indicate one or more activation operations performed on a selected cell group.

Exemplarily, the activation operation includes but is not limited to one or more of the following.
a) Determine whether the terminal executes RACH according to the indication information, for example, start RACH on a cell that needs to be activated or a cell in a cell group that needs to be activated.
b) For the deactivated serving cell group, BFD is performed or BFD is stopped. For example, it is determined according to the indication information whether the UE performs BFD for the deactivated cell group/cell.
c) For the deactivated serving cell group, RLM is performed or RLM is stopped. For example, the terminal determines whether the terminal performs RLM for the deactivated cell group/cell according to the indication information.
d) For the deactivated serving cell group, the timing advance TA timer is stopped. For example, it is determined according to the indication information whether the terminal stops the TA timer for the deactivated cell group/cell.
e) Determine whether the UE performs downlink synchronization according to the indication information.
f) For the selected cell group, downlink synchronization is performed. For example, it is determined according to the indication information whether the terminal performs downlink synchronization, wherein downlink synchronization is performed on a cell that needs to be activated or a cell in a cell group that needs to be activated.

It can be understood that the activation operation involved in the embodiments of the present disclosure may be the activation operations involved in the process that needs to be executed for the terminal to activate the cell group/cell, and/or the process that needs to be executed for deactivating the cell group/cell, and/or the process that needs to be executed for the terminal to change the cell group/cell in the above-mentioned embodiments, and the embodiments of the present disclosure do not limit this. For example, the embodiments of the present disclosure can determine whether to execute any one or more activation operations involved in the process that needs to be executed for the terminal to activate the cell group/cell, and/or the process that needs to be executed for deactivating the cell group/cell, and/or the process that needs to be executed for the terminal to change the cell group/cell in the above-mentioned embodiments according to the indication information.

It can be further understood that the indication information sent by the network device in the embodiment of the present disclosure can be used to indicate at least one of the following.
a) The activation mode of the cell group selected by the terminal.
b) The specific action of the terminal in performing cell group activation processing.
c) One or more activation operations performed on the selected cell group.

In a communication method provided by the embodiment of the present disclosure, the indication information sent by the network device may be independently configured for each cell/cell group, or may be independently configured for the selective activation configuration of each cell/cell group. In the present embodiment, for the activation/deactivation of a cell group/cell, it can be determined whether to perform a specific step according to the indication information specific to the cell group/cell.

In a communication method provided by the embodiment of the present disclosure, the indication information sent by the network device may be general indication information, and whether to execute specific steps is determined according to the indication information regardless of which cell group/cell is activated/deactivated.

In a communication method provided by the embodiment of the present disclosure, the indication information sent by the network device may be a separate indication information sent independently, or may be carried in an existing signaling. For example, in the embodiment of the present disclosure, the indication information sent by the network device may be included in the cell group selective activation configuration, and when activating this cell group, the terminal determines whether to execute the above-mentioned related process of the activation processing performed on the cell group according to the corresponding configuration information. For another example, in the embodiment of the present disclosure, the indication information may also be included in the activation command, and when the terminal receives the activation command, it determines whether to execute the above-mentioned related process of the activation processing performed on the cell group according to the indication information in the activation command.

In the embodiment, the communication method applied to the network device provided in the embodiment of the present disclosure is similar to the execution process of the communication method applied to the terminal. Therefore, for the parts where the description of the communication method executed by the network device is not detailed enough, reference can be made to the corresponding part of the communication method executed by the terminal, which will not be described in detail here.

It should be noted that the communication method provided in the embodiments of the present disclosure is applicable to the activation process flow in which a terminal interacts with a network device to realize cell group activation and/or deactivation. In the activation process flow in which a network device interacts with a terminal to realize cell group activation and/or deactivation, the network device and the terminal each have the functions of the network device and the terminal in the above-mentioned embodiments, which will not be described in detail here.

It should be noted that those skilled in the art can understand that the various implementation methods/embodiments involved in the embodiments of the present disclosure can be used in conjunction with the aforementioned embodiments or can be used independently. Whether used alone or in conjunction with the aforementioned embodiments, the implementation principle is similar. **In** the implementation of the present disclosure, some embodiments are described in terms of implementation methods used together. Of course, those skilled in the art can understand that such examples are not limitations of the embodiments of the present disclosure.

Based on the same concept, an embodiment of the present disclosure also provides a communication device.

It is understandable that the communication device provided by the embodiment of the present disclosure includes a hardware structure and/or software module corresponding to each function in order to realize the above functions. **In** combination with the units and algorithm steps of each example disclosed in the embodiment of the present disclosure, the embodiment of the present disclosure can be implemented in the form of hardware or a combination of hardware and computer software. Whether a function is executed in the form of hardware or computer software driving hardware depends on the specific application and design constraints of the technical solution. Those skilled in the art can use different methods to implement the described functions for each specific application, but such implementation should not be considered to exceed the scope of the technical solution of the embodiment of the present disclosure.

FIG. 21 is a block diagram of a communication device according to an exemplary embodiment. Referring to FIG. 21, a communication device 100 may be applied to a terminal, and the communication device 100 includes a receiving unit 101 and a processing unit 102.

The receiving unit 101 is configured to receive configuration information for selective activation of cell group; and the processing unit 102 is configured to perform cell group activation process based on the configuration information for selective activation of cell group, wherein the cell group activation process comprises cell group activation and/or cell group deactivation.

**In** an implementation, the configuration information for selective activation of cell group includes a selected cell group from cell groups to be activated; and
the performing cell group activation process based on the configuration information for selective activation of cell group, includes: performing activation of the selected cell group, and/or performing deactivation of a serving cell group.

**In** an implementation, performing activation of the selected cell group, and/or performing deactivation of the serving cell group, includes:
in response to existence of the serving cell group, deactivating the serving cell group and activating the selected cell group.

**In** an implementation, performing activation of the selected cell group, and/or performing deactivation of the serving cell group, includes:
in response to existence of the serving cell group, changing a current serving cell group to the selected cell group.

**In** an implementation, performing activation of the selected cell group, and/or performing deactivation of the serving cell group, includes:
in response to absence of the serving cell group, activating the selected cell group.

**In** an implementation, the processing unit 102 is further configured to: in response to a serving cell group being deactivated, suspend configuration information of the serving cell group that is deactivated, wherein the configuration information of the serving cell group is included in the configuration information for selective activation of cell group.

In an implementation, the processing unit 102 is further configured to perform one or more of:
for a serving cell group being deactivated, performing radio link management RLM or stopping performing RLM;
for a serving cell group being deactivated, performing beam failure detection BFD or stopping performing BFD;
for a serving cell group being deactivated, stopping a timing advance TA timer;
resetting a MAC entity.

In an implementation, the receiving unit 101 is further configured to: in response to a selected cell group being activated, apply or restore configuration information of the selected cell group, wherein the configuration information of the selected cell group is included in the configuration information for selective activation of cell group.

In an implementation, the processing unit 102 is further configured to perform one or more of:
for the selected cell group, starting random access RACH; and for the selected cell group, performing downlink synchronization.

In an implementation, the processing unit 102 is further configured to: in response to the configuration information of the selected cell group including synchronous reconfiguration, perform synchronous reconfiguration process.

In an implementation, the receiving unit 101 is further configured to:
in response to receiving configuration information of a cell group, acquire and/or store the configuration information of the cell group, wherein the configuration information of the cell group is included in the configuration information for selective activation of cell group;
wherein configuration information of the cell group is configuration information of a serving cell group and/or configuration information of a cell to be activated and/or configuration information of a selected cell group.

In an implementation, the configuration information for selective activation of cell group includes a cell group to be activated, and the performing cell group activation process based on the configuration information for selective activation of cell group includes: deactivating the cell group to be activated.

In an implementation, the processing unit 102 is further configured to: reset a media access control MAC entity.

In an implementation, the receiving unit 101 is further configured to: receive indication information sent by the network device, and the processing unit 102 is further configured to determine a mode for performing activation of the selected cell group.

In an implementation, the mode for performing activation includes one or more of:
deactivating a serving cell group and activating the selected cell group;
changing a current serving cell group to the selected cell group; and
activating the selected cell group.

In an implementation, the indication information is further used to indicate one or more activation operations performed on the selected cell group:
the activation operation includes:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer;
for the selected cell group, starting random access RACH; and
for the selected cell group, performing downlink synchronization.
resetting a media access control MAC entity.

In one implementation, the activation process performed on the cell group is determined based on a protocol rule or a terminal implementation.

In one implementation, the activation process performed on the cell group includes one or more of:
in response to key updating, performing a PDCP re-establishment;
in response to key updating, changing current activated cell by changing the cell group;
in response to triggering the terminal to activate a designated cell group and synchronization configuration including configuration information of the designated cell group, starting RACH on the designated cell group; and
in response to triggering the terminal to activate a designated cell group and BFD or RLM of the designated cell group being stopped, starting RACH for the designated cell group.

FIG. 22 is a block diagram of a communication device according to an exemplary embodiment. Referring to FIG. 22, a communication device 200 can be applied to a network device, and the communication device 200 includes a sending unit 201.

The sending unit 201 is configured to send configuration information for selective activation of cell group, to instruct a terminal to perform cell group activation process based on the configuration information for selective activation of cell group, wherein the cell group activation process comprises cell group activation and/or cell group deactivation.

In an implementation, the configuration information for selective activation of cell group includes a selected cell group from cell groups to be activated; and the performing cell group activation process based on the configuration information for selective activation of cell group, includes: performing activation of the selected cell group, and/or performing deactivation of a serving cell group.

**In** an implementation, the sending unit 201 is further configured to: send configuration information of a serving cell group, wherein the configuration information of the serving cell is included in the configuration information for selective activation of cell group.

**In** an implementation, the sending unit 201 is further configured to: send configuration information of the selected cell group, wherein the configuration information of the selected cell group is included in the configuration information for selective activation of cell group.

**In** an implementation, the configuration information of the selected cell group includes synchronous reconfiguration.

**In** an implementation, the sending unit is 201 further configured to: send configuration information of a cell group, wherein the configuration information of the cell group is included in the configuration information for selective activation of cell group;
wherein configuration information of the cell group is configuration information of a serving cell group and/or configuration information of a cell to be activated and/or configuration information of a selected cell group.

**In** an implementation, the sending unit 201 is further configured to: send instruction information, so that the terminal determines the mode for performing activation of a selected cell group based on the instruction information.

**In** an implementation, the mode for performing activation includes one or more of:
deactivating a serving cell group and activating the selected cell group.
changing a current serving cell group to the selected cell group.
activating the selected cell group.

**In** an implementation, the indication information is further used to indicate one or more activation operations performed on the selected cell group: the activation operation includes:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer.
for the selected cell group, starting random access RACH.
for the selected cell group, performing downlink synchronization.

It should be noted that the various modules/units involved in the communication device 100 and the communication device 200 involved in the embodiment of the present disclosure are only exemplary and are not intended to be limiting. For example, the communication device 200 in the embodiment of the present disclosure may also include a receiving unit and/or a processing unit. The receiving unit may, for example, receive relevant information sent by the terminal for the network device to determine the relevant cell group configuration information, and the processing unit may, for example, be used to determine the specific action of the activation processing of the cell group indicated subsequently based on the relevant configuration information of the cell group.

Regarding the device in the above embodiment, the specific manner in which each module performs operations has been described in detail in the embodiment of the method, and will not be elaborated here.

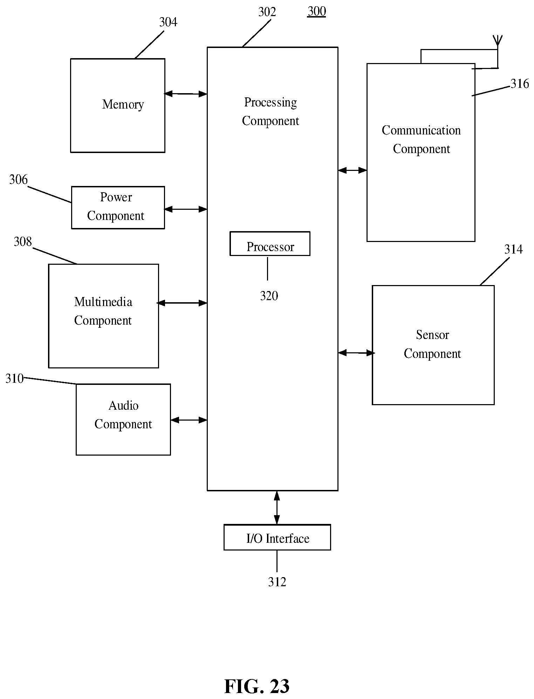

FIG. 23 is a block diagram of an apparatus 300 for communication according to an exemplary embodiment. The apparatus 300 may be provided as a terminal. For example, the device 300 may be a mobile phone, a computer, a digital broadcast terminal, a messaging device, a game console, a tablet device, a medical device, a fitness device, a personal digital assistant, and the like.

Referring to FIG. 23, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operations of the apparatus 300, such as operations associated with display, telephone calls, data communications, camera operations, and recording operations. The processing component 302 may include one or more processors 320 to execute instructions to complete all or part of the steps of the above method. Additionally, processing component 302 may include one or more modules that facilitate interaction between processing component 302 and other components. For example, processing component 302 may include a multimedia module to facilitate interaction between multimedia component 308 and processing component 302.

The memory 304 is configured to store various types of data to support operations at the apparatus 300. Examples of such data include instructions for any application or method operating on the apparatus 300, contact data, phonebook data, messages, pictures, videos, etc. The memory 304 can be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power component 306 provides power to various components of the apparatus 300. The power component 306 may include a power management system, one or more power supplies, and other components associated with generating, managing, and distributing power for apparatus 300.

The multimedia component 308 includes a screen providing an output interface between the apparatus 300 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 308 includes a front camera and/or a rear camera. When the apparatus 300 is in an operation mode, such as a photographing mode or a video mode, the front camera and/or the rear camera can receive external multimedia data. Each front camera and rear camera can be a fixed optical lens system or have focal length and optical zoom capability.

The audio component 310 is configured to output and/or input audio signals. For example, the audio component 310 includes a microphone (MIC), which is configured to receive an external audio signal when the apparatus 300 is in an operation mode, such as a call mode, a recording mode and a voice recognition mode. Received audio signals may be further stored in memory 304 or sent via communication component 316. In some embodiments, the audio component 310 also includes a speaker for outputting audio signals.

The I/O interface 312 provides an interface between the processing component 302 and a peripheral interface module, which may be a keyboard, a click wheel, a button, and the like. These buttons may include, but are not limited to: a home button, volume buttons, start button, and lock button.

The sensor component 314 includes one or more sensors for providing apparatus 300 with various aspects of status assessment. For example, the sensor component 314 can detect the open/closed state of the apparatus 300, the relative positioning of components, such as the display and the keypad of the apparatus 300, the sensor component 314 can also detect the apparatus 300 or a change in the position of a component of the apparatus 300, the presence or absence of user's contact with the apparatus 300, the change of orientation or acceleration/deceleration of the apparatus 300 and the temperature change of the apparatus 300. The sensor component 314 may include a proximity sensor configured to detect the presence of nearby objects in the absence of any physical contact. The sensor component 314 may also include an optical sensor, such as a CMOS or CCD image sensor, for use in imaging applications. In some embodiments, the sensor component 314 may also include an acceleration sensor, a gyroscope sensor, a magnetic sensor, a pressure sensor or a temperature sensor.

The communication component 316 is configured to facilitate wired or wireless communication between the apparatus 300 and other devices. The apparatus 300 can access a wireless network based on communication standards, such as Wi-Fi, 2G or 3G, or a combination thereof. In an exemplary embodiment, the communication component 316 receives broadcast signals or broadcast related information from an external broadcast management system via a broadcast channel. In an exemplary embodiment, the communication component 316 also includes a near field communication (NFC) module to facilitate short-range communication. For example, the NFC module can be implemented based on radio frequency identification (RFID) technology, infrared data association (IrDA) technology, ultra wideband (UWB) technology, bluetooth (BT) technology and other technologies.

In an exemplary embodiment, apparatus 300 may be implemented by one or more application specific integrated circuits (ASIC), digital signal processors (DSP), digital signal processing devices (DSPD), programmable logic devices (PLD), field programmable gate array (FPGA), controllers, microcontrollers, microprocessors or other electronic components for performing the method described above.

In an exemplary embodiment, there is also provided a non-transitory computer-readable storage medium including instructions, such as the memory 304 including instructions, which can be executed by the processor 320 of the apparatus 300 to implement the above method. For example, the non-transitory computer readable storage medium may be ROM, random access memory (RAM), CD-ROM, magnetic tape, floppy disk, and optical data storage device, and the like.

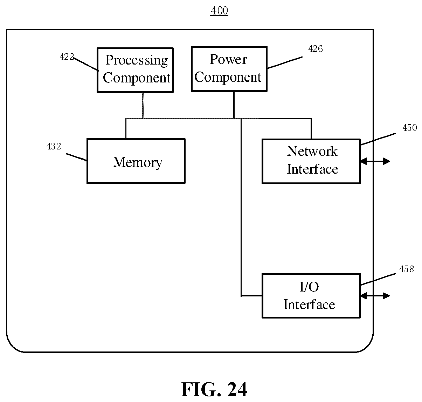

FIG. 24 is a block diagram of an apparatus 400 for communication according to an exemplary embodiment. For example, the apparatus 400 may be provided as a network device. Referring to FIG. 24, the apparatus 400 includes a processing component 422, which further includes one or more processors, and a memory resource represented by a memory 432 for storing instructions executable by the processing component 422, such as an application. The application stored in the memory 432 may include one or more modules, each corresponding to a set of instructions. In addition, the processing component 422 is configured to execute instructions to perform the above method.

The apparatus 400 may also include a power component 426 configured to perform power management of the apparatus 400, a wired or wireless network interface 450 configured to connect the apparatus 400 to a network, and an input-output (I/O) interface 458. The apparatus 400 can operate based on an operating system stored in the memory 432, such as Windows Server^{™}, Mac OS X^{™}, Unix^{™}, Linux^{™}, FreeBSD^{™} or the like.

In an exemplary embodiment, a non-transitory computer-readable storage medium including instructions is also provided, such as the memory 432 including instructions, and the instructions can be executed by the processing component 422 of the apparatus 400 to perform the above method. For example, the non-transitory computer-readable storage medium can be a ROM, a random access memory (RAM), a CD-ROM, a magnetic tape, a floppy disk, an optical data storage device, etc.

It is further understood that in the present disclosure, "plurality" refers to two or more than two, and other quantifiers are similar. "And/or" describes the association relationship of associated objects, indicating that three relationships may exist. For example, A and/or B can represent: A exists alone, both A and B exist, and B exists alone. The character "/" generally indicates that the associated objects before and after are in an "or" relationship. The singular forms "a", "the" and "the" are also intended to include the plural forms, unless the context clearly indicates other meanings.

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Other embodiments of the disclosure will be readily apparent to those skilled in the art from consideration of the specification and practice of the invention disclosed herein. This application is intended to cover any modification, use or adaptation of the present disclosure, these modifications, uses or adaptations follow the general principles of the present disclosure and include common knowledge or conventional technical means in the technical field not disclosed in this disclosure.

It should be understood that the present disclosure is not limited to the precise constructions which have been described above and shown in the accompanying drawings, and various modifications and changes may be made without departing from the scope thereof. The scope of the disclosure is limited only by the scope of the appended claims.

## Claims

1. A communication method, applied to a terminal, and comprising:
receiving configuration information for selective activation of cell group; and
performing cell group activation process based on the configuration information for selective activation of cell group, wherein the cell group activation process comprises cell group activation and/or cell group deactivation.

2. The method according to claim 1, wherein the configuration information for selective activation of cell group comprises a selected cell group from cell groups to be activated; and
the performing cell group activation process based on the configuration information for selective activation of cell group, comprises:
performing activation of the selected cell group, and/or performing deactivation of a serving cell group.

3. The method according to claim 2, wherein performing activation of the selected cell group, and/or performing deactivation of the serving cell group, comprises:
in response to existence of the serving cell group, deactivating the serving cell group and activating the selected cell group.

4. The method according to claim 2, wherein performing activation of the selected cell group, and/or performing deactivation of the serving cell group, comprises:
in response to existence of the serving cell group, changing a current serving cell group to the selected cell group.

5. The method according to claim 2, wherein performing activation of the selected cell group, and/or performing deactivation of the serving cell group, comprises:
in response to absence of the serving cell group, activating the selected cell group.

6. The method according to any one of claims 1 to 5, further comprising:
in response to a serving cell group being deactivated, suspending configuration information of the serving cell group that is deactivated, wherein the configuration information of the serving cell group is comprised in the configuration information for selective activation of cell group.

7. The method according to any one of claims 1 to 6, further comprising one or more of:
for a serving cell group being deactivated, performing radio link management RLM or stopping performing RLM;
for a serving cell group being deactivated, performing beam failure detection BFD or stopping performing BFD;
for a serving cell group being deactivated, stopping a timing advance TA timer; and
resetting a media access control MAC entity.

8. The method according to any one of claims 1 to 5, further comprising:
in response to a selected cell group being activated, applying or restoring configuration information of the selected cell group, wherein the configuration information of the selected cell group is comprised in the configuration information for selective activation of cell group.

9. The method according to any one of claims 1 to 5 and 8, further comprising one or more of:
for a selected cell group, starting random access RACH; and
for a selected cell group, performing downlink synchronization.

10. The method according to claim 8, further comprising:
in response to the configuration information of the selected cell group comprising synchronous reconfiguration, performing synchronous reconfiguration process.

11. The method according to claim 1, further comprising:
in response to receiving configuration information of a cell group, acquiring and/or storing the configuration information of the cell group, wherein the configuration information of the cell group is comprised in the configuration information for selective activation of cell group;
wherein configuration information of the cell group is configuration information of a serving cell group and/or configuration information of a cell to be activated and/or configuration information of a selected cell group.

12. The method according to any one of claims 1 to 11, further comprising:
receiving instruction information sent by the network device; and
determining a mode for performing activation of a selected cell group.

13. The method according to claim 12, wherein the mode for performing activation comprises one or more of:
deactivating a serving cell group and activating the selected cell group;
changing a current serving cell group to the selected cell group; and
activating the selected cell group.

14. The method according to claim 13, wherein the indication information is further used to indicate one or more activation operations performed on the selected cell group:
the activation operation comprises:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer;
for the selected cell group, starting random access RACH; and
for the selected cell group, performing downlink synchronization.
resetting a media access control MAC entity.

15. The method according to claim 1, wherein the activation process performed on the cell group is determined based on a protocol rule or a terminal implementation.

16. The method according to claim 15, wherein the activation process performed on the cell group comprises one or more of:
in response to key updating, performing a PDCP re-establishment;
in response to key updating, changing current activated cell by changing the cell group;
in response to triggering the terminal to activate a designated cell group and synchronization configuration comprising configuration information of the designated cell group, starting RACH on the designated cell group; and
in response to triggering the terminal to activate a designated cell group and BFD or RLM of the designated cell group being stopped, starting RACH for the designated cell group.

17. A communication method, applied to a network device, and comprising:
sending configuration information for selective activation of cell group, to instruct a terminal to perform cell group activation process based on the configuration information for selective activation of cell group, wherein the cell group activation process comprises cell group activation and/or cell group deactivation.

18. The method according to claim 17, wherein the configuration information for selective activation of cell group comprises a selected cell group from cell groups to be activated; and
the performing cell group activation process based on the configuration information for selective activation of cell group, comprises:
performing activation of the selected cell group, and/or performing deactivation of a serving cell group.

19. The method according to any one of claims 17 to 18, further comprising:
sending configuration information of a serving cell group, wherein the configuration information of the serving cell is comprised in the configuration information for selective activation of cell group.

20. The method according to any one of claims 17 to 18, further comprising:
sending configuration information of a selected cell group, wherein the configuration information of the selected cell group is comprised in the configuration information for selective activation of cell group.

21. The method according to claim 20, wherein the configuration information of the selected cell group comprises synchronous reconfiguration.

22. The method according to claim 20, further comprising:
sending configuration information of a cell group, wherein the configuration information of the cell group is comprised in the configuration information for selective activation of cell group;
wherein configuration information of the cell group is configuration information of a serving cell group and/or configuration information of a cell to be activated and/or configuration information of a selected cell group.

23. The method according to any one of claims 17 to 22, further comprising:
sending instruction information, wherein the instruction information is used to indicate to the terminal a mode for performing activation of a selected cell group.

24. The method according to claim 23, wherein the mode for performing activation comprises one or more of:
deactivating a serving cell group and activating the selected cell group;
changing a current serving cell group to the selected cell group; and
activating the selected cell group.

25. The method according to claim 24, wherein the indication information is further used to indicate one or more activation operations performed on the selected cell group:
the activation operation comprises:
for the serving cell group being deactivated, performing radio link management RLM or stopping performing RLM;
for the serving cell group being deactivated, performing beam failure detection BFD or stopping performing BFD;
for the serving cell group being deactivated, stopping a timing advance TA timer;
for the selected cell group, starting random access RACH;
for the selected cell group, performing downlink synchronization; and
resetting a media access control MAC entity.

26. A communication apparatus, comprising:
a receiving unit, configured to receive configuration information for selective activation of cell group; and
a processing unit, configured to perform cell group activation process based on the configuration information for selective activation of cell group, wherein the cell group activation process comprises cell group activation and/or cell group deactivation.

27. A communication apparatus, comprising:
a sending unit, configured to send configuration information for selective activation of cell group, to instruct a terminal to perform cell group activation process based on the configuration information for selective activation of cell group, wherein the cell group activation process comprises cell group activation and/or cell group deactivation.

28. A communication apparatus, comprising:
a processor; and
a memory for storing processor-executable instructions;
wherein the processor is configured to: execute the method according to any one of claims 1 to 16.

29. A communication apparatus, comprising:
a processor; and
a memory for storing processor-executable instructions;
wherein the processor is configured to: execute the method according to any one of claims 17 to 25.

30. A storage medium, wherein instructions are comprised in the storage medium, and when the instructions in the storage medium are executed by a processor of a terminal, the terminal is enabled to execute the method according to any one of claims 1 to 16.

31. A storage medium, wherein instructions are comprised in the storage medium, and when the instructions in the storage medium are executed by a processor of a network device, the network device is enabled to execute the method according to any one of claims 17 to 25.
